# EUROPEAN PATENT SPECIFICATION

(11) **EP 1 126 657 B1**
(45) Date of publication and mention of the grant of the patent: **30.04.2008**
(21) Application number: 00124534.9
(22) Date of filing: 09.11.2000
(51) Int. Cl.: H04L 12/24

(54) **Data communication network service providing system executing macro command**
Datenkommunikationsnetzwerkdienst zur Erzeugung einer Durchführungsmakrobefehl
Service d'un réseau de communication de données fournissant une commande macro d'exécution

(30) Priority: 24.11.1999 JP 33305999; 14.01.2000 JP 2000006694
(43) Date of publication of application: 22.08.2001
(73) Proprietor: Sharp Kabushiki Kaisha, Osaka-shi Osaka (JP)
(72) Inventor: Yokogawa, Kazuyuki, Osaka-shi, Osaka (JP)
(74) Representative: Müller - Hoffmann & Partner

(56) References cited:
- WO-A-98/59282
- US-A- 5 867 106
- US-A- 5 895 462
- US-A- 5 917 905

## Description

Data Communication Network Service Providing System Executing Macro Command Prepared by Combining Function Modules Implementing Predetermined Functions

### BACKGROUND OF THE INVENTION

### Field of the Invention

The present invention relates to a system and a method for providing data communication network services as well as to a macro server used in the data communication network service providing system.

More specifically, the present invention relates to a system and a method of providing data communication network services allowing execution of a complicated process by a simple operation, as well as to a macro server used in the data communication network service providing system.

### Description of the Background Art

US 5,917,905 describes telephone station equipment employing rewritable display keys on a keypad. A telephone instrument is coupled to an apparatus such as a personal computer, a network server or switch that is capable of performing telephony functions. The telephone instrument responds to an input from the keypad by providing a new set of legends for the keys and/or performing a telephone function. The telephone instrument can be connected both to a personal computer and to a telephone network. The connection to the personal computer takes place through an interface connection.

From WO 98/59282 a browser based command and control home network for commanding and controlling diverse home devices has been known. The home devices are connected to a single control loop which may be implemented by connecting the devices to a home network. A user interacts with a user interface displayed on a first device by a control device. Control and command information is sent from the first device to a second device in order to control the second device according to the user input. Since the user interface can be displayed from any device, a single control device may control a plurality of different devices without requiring any change in the mode of operation in the control device.

Recently, portable telephones having simple Web (World Wide Web) browsing function and terminals specialized in certain functions such as a consumer game machine incorporating Web browsing function (hereinafter referred to as "NonPC terminal: Non Personal Computer terminal") have come to be widely used. Such a portable telephone and an NonPC terminal are preset for communication, advantageously allowing easy connection to the Internet even by a beginner.

Services provided over the Internet typically represented by an electronic mail service, Gopher or the Web basically assume use in a personal computer (hereinafter referred to as a "PC") or a work station. A portable telephone and an NonPC terminal are not provided with a keyboard, and a display screen of a portable telephone is small. Character input through a portable telephone requires input through ten keys in place of the keyboard. Character input through the NonPC terminal requires tapping keyboards displayed on the screen (software keyboard). Both methods are rather troublesome.

The function of the Web browser software executed on a portable telephone or an NonPC terminal compares unfavorably with the function operated on a PC. Further, a file system such as utilized in the PC is not available in the portable telephone or the NonPC terminal. Therefore, handling of the received data is troublesome.

These limiting factors of the NonPC terminal or the like makes it difficult to enjoy services which are readily available on the PC, and hence the original advantage of such NonPC terminals of easy connection to the Internet and ready reception of services is lost.

From the service providers' point of view, newly providing services exclusively for each of the terminals including the NonPC terminal is difficult, considering necessary costs and risks in investment.

### SUMMARY OF THE INVENTION

Therefore, an object of the present invention is to implement a data communication network service providing system enabling a terminal such as an NonPC terminal having limited input or display function to receive results of complicated processings by a simple operation, through a data communication network.

Another object of the present invention is to implement a data communication network service providing system providing information advantageous to a user through a data communication network without complicated operations.

A still further object of the present invention is to provide a macro server used in a data communication network service providing system enabling a terminal such as an NonPC terminal having limited input or display function to obtain results of complicated processings by a simple operation through a data communication network.

A still further object of the present invention is to provide a macro server used in a data communication network service providing system providing information advantageous to a user without complicated operations through a data communication network.

A still further object of the present invention is to implement a data communication network service providing method enabling a terminal such as an NonPC terminal having limited input or display function to obtain results of complicated processings by a simple operation through a data communication network.

A still further object of the present invention is to implement a data communication network service providing method providing information advantageous to a user without complicated operations through a data communication network.

According to an aspect, the data communication network service providing system of the present invention comprises: a macro server connected to an external server or the like, a terminal connected to the macro server, wherein the macro server includes: a communication unit adapted to control communication with the terminal, a data base unit adapted to store a macro command, and a macro executing unit connected to the data base unit and the communication unit adapted to execute the macro command in response to an instruction from the terminal and to transmit a result of execution to the terminal. In the data communication network service providing system the terminal is connected to the macro server through a data communication network, the communication unit is adapted to control communication with the terminal through the data communication network, and the macro server further includes: a user authentication unit connected to the communication unit adapted to perform user authentication based on a user ID transmitted from the terminal through the data communication network, a function module unit adapted to store a function module and implementing a predetermined function, a macro configuration unit connected to the communication unit and the function module unit and adapted to configure a macro command for performing a series of processes prepared by combining function modules, and a macro registration unit connected to the macro configuration unit and the data base unit being adapted to register the macro command with the data base unit.

As the macro command is executed in response to an instruction from the terminal, the series of processings are executed, and the result of execution is transmitted to the terminal. Therefore, it is possible for a user to obtain the results of complicated processings by a simple operation through the data communication network, even by an NonPC terminal or the like having limited input or display function.

Preferably, the macro server further includes a user registration unit connected to the data base and registering a user ID (Identification) of a user who is allowed to use the macro command registered in the data base.

As the user ID of a user who uses the macro command is registered in advance, the user of the macro command can be limited.

More preferably, the function module unit stores a first function module for accessing a data base server, a second function module for data search based on a search key word, a third function module for setting an output format of the search result, and a fourth function module for setting the method of notifying the search result. The macro command is a combination of one or more of the first to fourth function modules.

The combination of the first to fourth function modules enable an NonPC terminal or the like having limited input or display function to perform a series of processings including data base search using a search key word and graph representation of the search results, by a simple operation. The search key word may be registered in advance when the macro command is configured, or the key word may be input through the terminal every time the macro command is to be executed. Input of the search key word through the terminal enables more flexible search processings.

More preferably, the function module unit includes a first function module for accessing to a first search server providing a Web page search service and providing search results, a second function module for accessing to a second search server providing a Web page search service different from the first search server and providing the search results, a third function module receiving a search condition and applying a search condition required by each of the first and second search servers to the first and second search modules, respectively, and a fourth function module receiving the search results from the first and second function modules and canceling accumulative search results, and the macro command is a combination of the first to fourth function modules.

The combination of the first to fourth function modules enables the user to obtain search results from a plurality of search services by simply inputting a search condition once.

More preferably, the function module unit includes a first function module for accessing to a server computer outputting an address based on a search condition and providing the address, a second function module for accessing to a server computer outputting a map based on the address and providing the map, and a third function module receiving a search condition and applying it to the first function module, and the macro command is a combination of the first to third function modules. The combination of the first to third function modules enable the user to obtain a map of an address which matches the search condition, by simply inputting the search condition.

More preferably, the macro command is also served by a macro command vendor.

As the macro command is provided by a specialized vendor, a user may enjoy services realized by macro commands of higher functions.

More preferably, the function module is provided by a macro command vendor.

As the function module is provided by a specialized vendor, the user may enjoy services realized by macro commands of higher functions.

More preferably, the macro server includes an execution state monitoring unit connected to the macro execution unit for monitoring the state of execution of the macro command.

As the state of execution of a macro command is monitored, it becomes possible to obtain information as to what macro command was executed by which user. This enables a service provider to charge the user a communication fee or service charge. Further, it is also possible to utilize a log related to execution of the macro for network distribution of advertisement.

According to another aspect, the macro server of the present invention is used in a data communication network service providing system comprising a macro server connected to a terminal and to an external server or the like being adapted to execute a prescribed process in accordance with an instruction from the terminal and to transmit a result of execution to the terminal, the macro server including: a communication unit being adapted to control communication with the terminal, a data base unit being adapted to store a macro command, and a macro executing unit connected to the data base unit and the communication unit and being adapted to execute the macro command in response to an instruction from the terminal and to transmit a result of execution to the terminal. The terminal is connected to the macro server through a data communication network, the communication unit is adapted to control communication with the terminal through the data communication network, and the macro server further includes: a user authentication unit connected to the communication unit and being adapted to perform user authentication based on a user ID transmitted from the terminal through the data communication network, a function module unit being adapted to store a function module implementing a predetermined function, a macro configuration unit connected to the communication unit and the function module unit and being adapted to configure a macro command for performing a series of processes prepared by combining function modules, and a macro registration unit connected to the macro configuration unit and the data base unit, and being adapted to register the macro command with the data base unit.

The macro command is executed in response to an instruction from the terminal, whereby a series of processings are executed, with the result of execution transmitted to the terminal. Therefore, it is possible for the user to obtain the result of complicated processings by a simple operation through the data communication network even with a NonPC terminal having limited input or display function.

According to still a further aspect, the data communication network service providing method of the present invention is used in a data communication network service providing system comprising a macro server connected to a terminal and to an external server or the like for executing a prescribed process in accordance with an instruction from the terminal and transmitting a result of execution to the terminal, wherein the macro server includes a communication unit for controlling communication with the terminal, a data base unit storing a macro command, and a macro executing unit connected to the data base unit and the communication unit for executing the process. The method comprises the steps of: connecting the terminal to the macro server through a data communication network, controlling communication with the terminal through the data communication network by the communication unit, performing a user authentication based on a user ID transmitted from the terminal, storing in a function module unit a function module implementing a predetermined function, configuring a macro command for performing a series of processes prepared by combining function modules by a macro configuration unit connected to the communication unit and the function module unit, and registering the macro command with the data base unit by a macro registration unit connected to the macro configuration unit and the data base unit.

The macro command is executed in response to an instruction from the terminal and a series of processings are executed, with the result of execution transmitted to the terminal. Therefore, it is possible for the user to obtain the result of complicated processings by a simple operation through the data communication network, even by an NonPC terminal having limited input or display function.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a block diagram representing a hardware configuration of a macro server in accordance with a first embodiment of the present invention.
Fig. 2 is a flow chart of a macro command registration process in accordance with the first embodiment.
Fig. 3 is a flow chart of a macro command execution process in accordance with the first embodiment.
Fig. 4 is an illustration representing configuration of a macro command related to an electronic mail operation.
Fig. 5 is a schematic illustration of a process for executing a macro command using a telephone.
Fig. 6 is a block diagram representing a hardware configuration of a macro server in accordance with a third embodiment.
Fig. 7 is a flow chart of a macro command registration process in accordance with the third embodiment.
Fig. 8 is a flow chart of an advanced user registration process in accordance with the third embodiment.
Fig. 9 is a table of data registered in the data base unit.
Fig. 10 is a flow chart of a macro command execution process in accordance with the third embodiment.
Fig. 11 shows a dialogue box for user ID and password registration, displayed at the time of advanced user registration process.
Fig. 12 is an example of a macro command category list displayed at the time of advanced user registration process.
Fig. 13 is an example of a macro command list displayed at the time of advanced user registration process.
Fig. 14 is a dialogue for setting parameters displayed at the time of advanced user registration process.
Fig. 15 is a display of a registration acknowledgement message appearing at the time of advanced user registration process.
Fig. 16 shows a list of macro commands displayed at the time of advanced user registration process.
Fig. 17 represents a dialogue box for setting parameters displayed at the time of advanced user registration process.
Fig. 18 represents a dialogue box for user authentication displayed when a macro command is executed.
Fig. 19 is a list of executable macro commands displayed when a macro command is executed.
Fig. 20 represents the result of execution of a macro command.
Fig. 21 is an illustration representing the macro command execution process using a DTMF signal.
Fig. 22 is a block diagram representing a hardware configuration of a macro server in accordance with a fourth embodiment.
Fig. 23 is a flow chart of the advanced user registration process in accordance with the fourth embodiment.
Fig. 24 is a table of data registered in the data base unit.
Fig. 25 is a flow chart of a process in accordance with a macro command for network distribution of advertisement.
Fig. 26 is an illustration of a process in accordance with a macro command for push-transmission of an advertisement of a data communication network service provider providing services at a bargain price.
Fig. 27 shows a dialogue box for inputting parameters for a purchase through on line shopping, in accordance with a fifth embodiment.
Fig. 28 is an illustration representing a process executed in accordance with a macro command to place an order for the on-line shopping.
Figs. 29A to 29C represent examples of Web pages providing Web page search services.
Fig. 30 is an illustration of a process of a macro command for Web page search using a plurality of WWW (World Wide Web) search engines.
Fig. 31 is an illustration of user operations necessary for executing the macro command shown in Fig. 30.
Figs. 32A and 32B show examples of a map information providing Web page and a city guide Web page, respectively.
Fig. 33 is an illustration of a process of a macro command enabling output of a map of a shop in response to an input of the shop name.
Fig. 34 is an illustration of a process of a macro command enabling output of a location of a shop on the map, when area and type are input.

### DESCRIPTION OF THE PREFERRED EMBODIMENTS

### First Embodiment

The data communication network service providing system in accordance with the first embodiment of the present invention includes a terminal (not shown) such as an NonPC terminal, or a portable telephone connected to the Internet, and a macro server, which will be described later, connected to the Internet and providing services to the terminal.

A macro command, which will be described later, is executed on the macro server. A user requests execution of a macro command to the macro server and obtains the result of execution. The macro command refers to a program configured by a combination of software modules implementing basic functions (hereinafter referred to as "function modules"). Execution of a macro command realizes execution of a series of software modules. The macro command is used as manner for realizing functions required by the user through a simple operation.

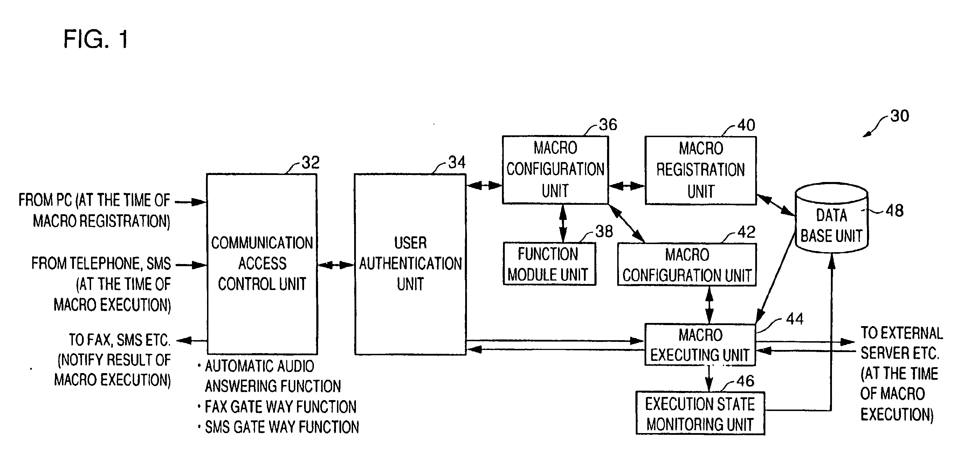

Referring to Fig. 1, a macro server 30 includes: a communication access control unit 32 providing a communication interface with an internet terminal such as a PC as well as to a communication terminal including a telephone and facsimile (hereinafter referred to as "FAX"); a user authentication unit 34 connected to communication access control unit 32 for performing user authentication based on a user ID transmitted from the terminal; a function module unit 38 storing various function modules; a macro configuration unit 36 connected to user authentication unit 34 and function module unit 38 for configuring a macro command using the function modules stored in function module unit 38; a macro registration unit 40 connected to macro configuration unit 36 and registering the macro command configured by macro configuration unit 36 with the data base unit 48, which will be described later; and a data base unit 48 connected to macro registration unit 40 and an execution state monitoring unit 46, which will be described later, storing a macro command and an output from execution state monitoring unit 46.

Macro server 30 further includes: a macro converting unit 42 connected to macro configuration unit 36 and a macro execution unit 44, which will be described later, for converting a macro command to a program format executable on macro server 30; the macro execution unit 44 connected to user authentication unit 34, macro converting unit 42 and data base unit 48, reading a macro command stored in data base unit 48 using a DTMF (Dual Tone Multi Frequency) signal of a telephone, an SMS (Short Message Service) message of a portable telephone or a PHS (Personal Handyphone System) or a simple request of an internet electronic mail as a trigger, executing the macro command after the macro command is converted by macro converting unit 42 to an executable program format, and communicating with an external server or the like when the macro command is executed; and the execution state monitoring unit 46 connected to macro executing unit 44 and monitoring the state of execution of the macro command.

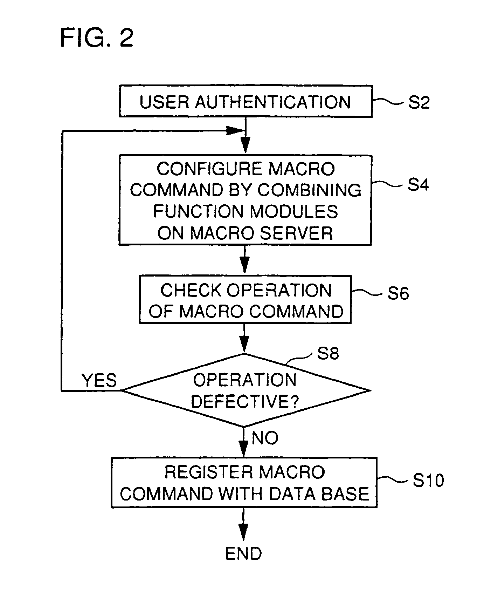

Referring to Fig. 2, a process of configuring a macro command on macro server 30 and registering with data base unit 48 (macro command registration process) will be described.

User authentication unit 34 performs a user authentication process (S2) in which a user ID and a password are received from the terminal, and whether the user ID and the password are registered or not is determined. Without user authentication, the following process is not performed. After user authentication, macro configuration unit 36 configures a macro command (S4) by combining function modules stored in function module unit 38. Macro converting unit 42 converts the macro command configured by macro configuration unit 36 to a format executable by the macro executing unit 44. The macro command is executed by macro executing unit 44 and operations are checked (S6). If the macro command operation is defective (YES in S8), process steps following S4 are repeated to reconfigure the macro command. If the operation of the macro command is not defective (NO in S8), macro registration unit 40 registers the macro command in association with the user ID, with the data base unit 48 (S10).

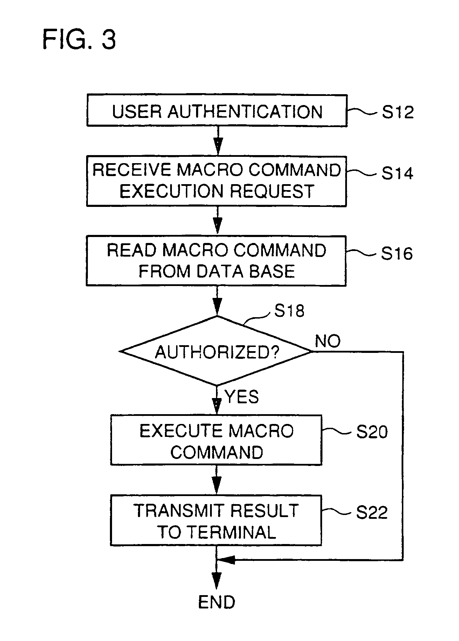

Referring to Fig. 3, a process for executing the macro command on macro server 30 (macro command execution process) in accordance with an instruction from the terminal will be described.

As in the step S2 of Fig. 2, user authentication process is performed (S12). After user authentication, macro executing unit 44 receives an execution request of a macro command from the terminal (S14). Macro executing unit 44 reads the macro command requested by the terminal from data base unit 48 (S16). Macro executing unit 44 determines whether the user is authorized to execute the read macro command (S18). If the user is not authorized (NO in S18), the macro command is not executed and the process is terminated. If the user is authorized (YES in S18), macro executing unit 44 executes the macro command, after the macro command is converted to an executable program format by macro converting unit 42 (S20). Macro executing unit 44 transmits the result of execution to the terminal through user authentication unit 34 and communication access control unit 32 (S22).

The macro command registration process described with reference to Fig. 2 will be discussed in greater detail. When a macro command is to be registered with macro server 30, a terminal with good operability and fine GUI (Graphical User Interface) environment such as a PC or a work station is used. Use of such a terminal facilitates configuration of a macro command realizing complicated operations.

The process for configuring a macro command (the process of S4) will be described in detail. A function module constituting a macro command is described in an interpreter language which can be directly executed by an interpreter incorporated in macro executing unit 44, or a compile language which requires conversion to an executable format by a compiler incorporated in macro converting unit 42. It is assumed that such function modules that are listed in Table 1 below are prepared in function module unit 38.

**Table 1**

| No. | Function | Parameter |
|---|---|---|
| 1 | Access to electronic mail server | e-mail server address |
| | | user ID |
| | | password |
| 2 | Display number of e-mails | - |
| 3 | Display e-mail list | - |
| 4 | List e-mails matching search key word | Search key word |
| 5 | Delete e-mail(s) matching search key word | Search key word |
| 6 | Transfer e-mails matching search Transfer e-mails matching search keyword one by one | Search key word |
| | | Transfer destination e-mail address |
| 7 | Transfer e-mails matching search key word collectively as one e-mail | Search key word |
| | | Transfer destination e-mail address |
| 8 | Set method of notifying processing result | Notification method |
| | | Notification address or number |

The function module of No. 1 performs the process of accessing to an electronic mail server and at that time, an electronic mail server address, a user ID and a password are necessary. Function module No. 2 displays the number of electronic mails stored in the electronic mail server. No parameter is necessary at this time.

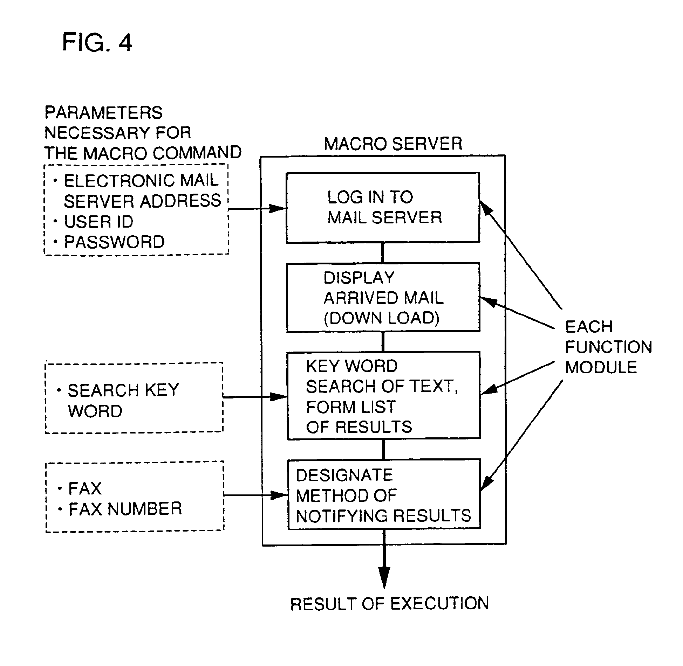

Various macro commands can be configured by combining these function modules. For example, referring to Fig. 4, when a macro command realizing the function of "obtaining, by FAX, a list of electronic mails matching a search key word among electronic mails,", a total of four function modules, that is, modules of Nos. 1, 3, 4 and 8 may be combined. According to the macro command, function module No. 1 logs in the electronic mail server. The electronic mail server address, the user ID and the password are applied as parameters. After the log-in, function module No. 3 down-loads the electronic mails. Thereafter, by function module No. 4, electronic mails containing a word matching the search key word designated by the parameter are searched, and a results list is formed. Finally, function module No. 8 designates the method of notification and the notification address or number as specified by the parameters. Here, FAX is designated as the method of notification, and facsimile number is designated as the notification address or number.

As another example, a macro command having the function of "notifying, by SMS, the number of electronic mails stored in the electronic mail server" can be configured by the combination of module Nos. 1, 2 and 8. There may be many other combinations.

When a macro command is to be executed, various parameters as shown in Table 1 must be set. These parameters are set in advance when the macro command is configured. By the advance setting of the parameters, it is unnecessary for the user to input the parameters when the macro command is to be executed through the terminal. This realizes complicated processings by a simple operation, so that the complicated processings can advantageously be enjoyed by a portable telephone, an NonPC terminal or the like.

The process for checking operations of the macro command (the process of S6 of Fig. 2) will be described in detail. Simple combination of function modules and setting of parameters do not enable execution of the macro command. Therefore, macro converting unit 42 automatically adds the process for passing parameters between function modules, error processing and so on, and converts the macro command to a format executable by the macro executing unit 44. Thereafter, a trial of the macro command is conducted in macro executing unit 44. In this trial, the macro command is executed up to a certain function module in the middle, or skip a process of a specific function module, and the operations of the macro command is checked. For example, by skipping the function module No. 8 of Table 1, the operations of the macro command can be checked without setting the method of notifying the result of execution. If there is any problem found in this process including a problem in the combination of function modules or set values of parameters (YES in S8), configuration of a macro is carried out again (S4).

The process of registering the macro command with the data base unit 48 (S10 of Fig. 2) will be described in detail. In this step, the macro command is registered, in association with the user ID authenticated by user authentication process, with the data base unit 48. At this time, it is necessary to set an ID for identifying the macro command (hereinafter referred to as "macro command ID") when the macro command is executed. The macro command ID may be determined by a user, or automatically allocated by macro registration unit 40. The macro command registered with the data base unit 48 is not in an executable program format but consists of information related to combination of function modules and information related to the set parameters. Thus, after registration of the macro command, the contents of the macro command can readily be changed. As the macro command is stored in the above described form, it is possible to edit the macro command by reading again the macro command stored in the data base unit 48 and providing the read macro command to macro configuration unit 36.

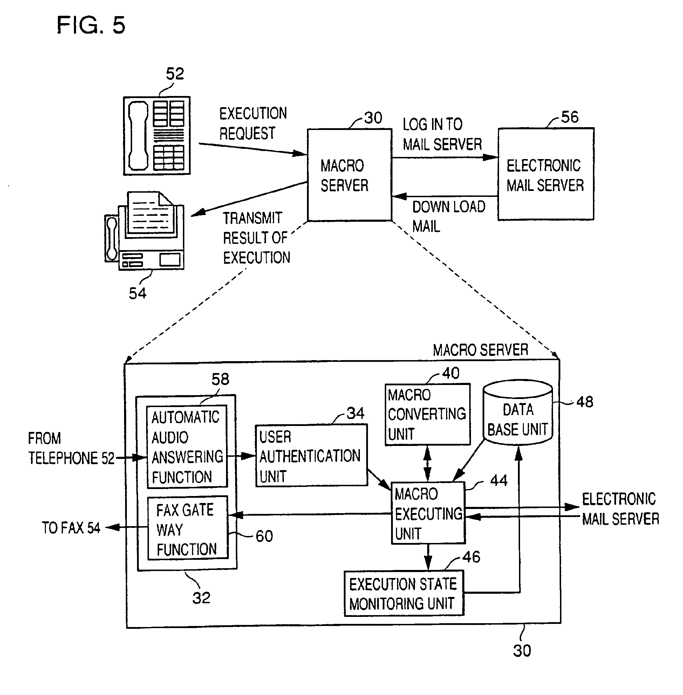

The macro command execution process described with reference to Fig. 3 will be discussed in greater detail. Communication access control unit 2 incorporates a communication protocol converting function for receiving macro command execution request from terminals of various types and for transmitting the results of execution. Referring to Fig. 5, when a macro command is to be executed through a telephone 52, a user speaks to an automatic audio answering function 58 provided in communication access control unit 32 through a telephone, transmits DTMF signals representing the user ID and the password in accordance with a voice guidance, and user authentication is performed (S12). In order to designate a macro command of which execution is requested, a DTMF signal representing the macro command ID is transmitted (S14). The DTMF signal is capable of representing ten different numbers from 0 to 9. Therefore, when the user ID or the like is represented by characters, combination of the DTMF signals distinguish the characters.

When a macro command is to be executed using the SMS, a message in compliance with a form template determined by an SMS gate way function in communication access control unit 32 is transmitted from the terminal to macro server 30, and user authentication and the request for executing a macro command take place. The message includes a user ID, a password and a macro command ID.

In the process of S16, macro executing unit 44 reads the macro command corresponding to the macro command ID from data base unit 48. At this time, the user ID authenticated by user authentication is compared with the user ID stored in association with the macro command, and when these match, it is determined that the user is authorized to execute the macro command. The read macro command consists only of the information related to combination of function modules and the information related to parameter setting. Therefore, the macro command is converted to an executable program format in the similar manner as in the step S6 of Fig. 2, and is executed (S20).

In accordance with the description of the macro command, when a process by a separate server connected to the network is necessary, macro executing unit 44 communicates with the separate server, and transmits a request for the designated process. The process is performed by the separate server, and the result is received by the macro executing unit 44. When the macro command shown in Fig. 4 described above is to be executed, referring to Fig. 5, macro executing unit 44 communicates with an external electronic mail server 56, and down-loads electronic mails.

In the process of S22, the result of execution is transmitted to the terminal in accordance with the method set by the macro command. For example, when text data is to be transmitted to a FAX, the text data is converted to image data by a FAX gate way function 60 incorporated in communication access control unit 32. The image data is transmitted to the FAX number designated by the parameter, in accordance with FAX communication protocol.

The logs of the macro command executing process, the process of transmitting execution result to the terminal and the like on macro server 30 are recorded in execution state monitoring unit 46. Information as to which user executed what macro command can be obtained from the logs. Such information is utilized for charging communication fee, service fee or the like to the user. The logs are written in data base unit 48.

As described above, in the data communication network service providing system in accordance with the present embodiment, it is possible for the user to execute complicated processes by a simple operation, as a macro command is configured in advance on a macro server 30.

Therefore, even by a terminal having limited operability such as a portable telephone or an NonPC terminal, it is possible to execute complicated processes. Further, by changing the method of notification of the result of executing the macro command, the execution result best suited for the terminal used can be obtained. Therefore, even with a portable telephone or the like having limited display function, satisfactory result can be obtained accordingly.

### Second Embodiment

In the first embodiment, all the parameters are set in advance in the macro command used. When the same process is executed every time as in the case of the macro command accessing the mail server described in the first embodiment, there is no problem if the parameters are added to the macro command and stored in advance.

Such an approach, however, is not very convenient for data search, for example, as the parameter cannot flexibly be modified. In view of this aspect, the present embodiment allows flexible modification or change of the parameters, as the parameters are designated when the macro command is executed.

The macro server constituting the data communication network service providing system in accordance with the present embodiment is the same as that of the first embodiment. Therefore, details will not be repeated here.

The configuration of a macro command is performed in the similar manner as the first embodiment. Here, a function module which performs a process by reading a parameter is used to configure a macro command.

The macro command is configured by using such function modules shown in Table 2. For example, function module No.1 performs the process for connecting to a data base server, and a data base server address, a data base name, a user ID and a password are used as parameters at that time. Function module No. 2 asks for an input of a search key word to the terminal, and based on the input search key word, performs data base search.

**Table 2**

| No. | Function | Parameter |
|---|---|---|
| 1 | Connect to data base server | Data base server address |
| | | Data base name |
| | | User ID |
| | | Password |
| 2 | Search data base | Search key word |
| 3 | Set result output form | Output form |
| 4 | Set method of notifying search result | Notification method |
| | | Notification address or number |

For example, by combining function modules Nos. 1 to 4, a macro command having the function of "searching data matching a search key word from the data base and notify to the FAX" can be configured. At this time, the search key word input through the terminal is used.

When such a macro command is registered in the same manner as shown in Fig. 2 and executed by the same method as shown in Fig. 3, it is possible to perform different data base search every time based on the search key word input when the macro command is executed.

As described above, by the data communication network service providing system in accordance with the present embodiment, services with high degree of freedom can be enjoyed through a simple operation.

### Third Embodiment

In the first and second embodiments, the macro command used is prepared by the user. In order to realize higher function, however, it may be possible to use a macro command formed by a vendor specialized in forming macro commands, referred to as a macro vendor. The data communication network service providing system in accordance with the present embodiment relates to such an approach. The macro command is provided as a pay service, on a macro server.

The data communication network service providing system in accordance with the present embodiment includes a terminal (not shown) such as an NonPC terminal, or a portable telephone connected to the Internet, and a macro server, which will be described later, connected to the Internet and providing services to the terminal.

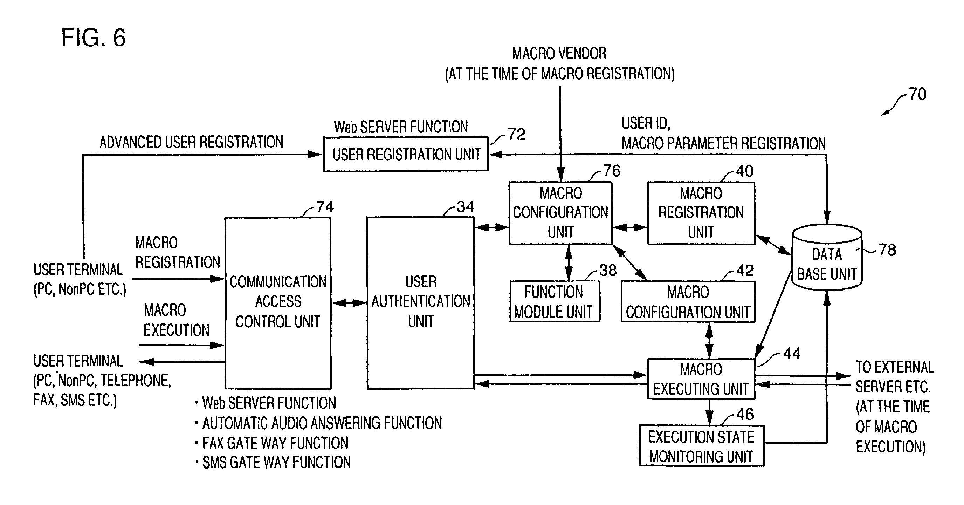

Referring to Fig. 6, a macro server 70 in accordance with the present embodiment includes: a user registration unit 72 having a Web server function for registration of a user ID and a macro command parameter; a communication access control unit 74 providing a communication interface with an internet terminal such as a PC as well as a communication terminals such as a telephone and a FAX; a user authentication unit 34 connected to communication access control unit 74; a function module unit 38; a macro configuration unit 76 connected to user authentication unit 34, function module unit 38 and a terminal (not shown) of the macro vendor, configuring a macro command using function modules stored in function module unit 38 in accordance with an instruction from the terminal of the macro vendor; a macro registration unit 40 connected to macro configuration unit 76; and a data base unit 78 connected to user registration unit 72, macro registration unit 40 and execution state monitoring unit 46.

Macro server 30 further includes a macro converting unit 42 connected to macro configuration unit 76 and macro executing unit 44; macro executing unit 44 connected to user authentication unit 34, macro converting unit 42 and data base unit 78, and execution state monitoring unit 46 connected to macro executing unit 44.

Components similar to those of the above described embodiments are denoted by the same reference characters. The names and the functions are also the same. Therefore, detailed description thereof will not be repeated here.

Communication access control unit 74 incorporates the Web server function, an automatic audio answering function, a FAX gate way function and an SMS gate way function.

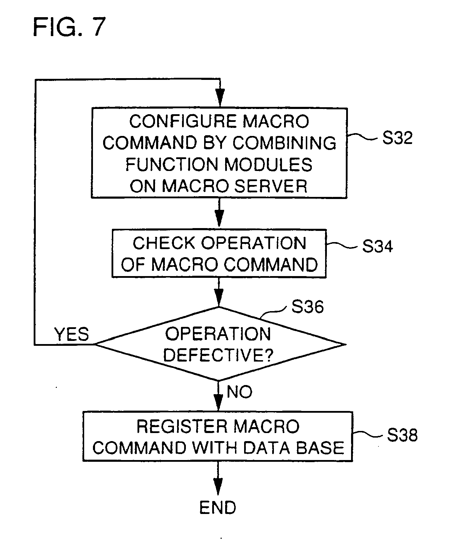

Referring to Fig. 7, the macro command registration process will be described. The macro vendor directly accesses the macro configuration unit 76, and configures a macro command, using function modules (S32). Function modules used are those stored in function module unit 38.

After the configuration of macro command, macro executing unit 44 conducts a trial of the macro command, so as to check the operations (S34). The process step is the same as S6 of Fig. 2. Therefore, detailed description thereof is not repeated here.

When the macro command operation is defective (YES in S36), the process steps following S32 are repeated. If the macro command operation is not defective (NO in S36), macro registration unit 40 registers the macro command with the data base unit 78 (S38). At this time, a macro command ID identifying the macro command is also registered in association. The macro command ID is provided by the macro vendor.

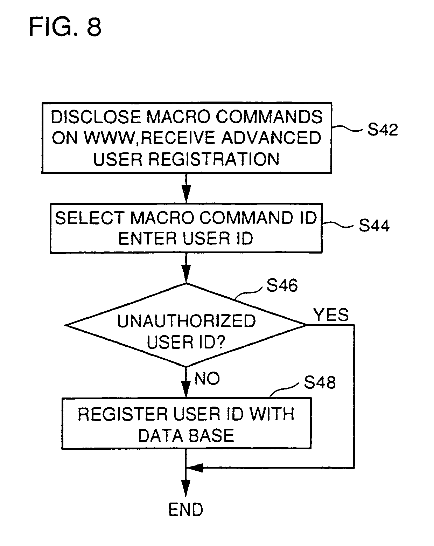

Referring to Fig. 8, the process for notifying a user ID to macro server 70 for the user to obtain authorization of executing the macro command registered by the macro vendor (advanced user registration process) will be described.

User registration unit 72 discloses macro commands registered by the macro vendor on the Internet using the Web server function (S42).

A user notifies, to user registration unit 72, a macro command ID of the macro command to be used, and the user ID (S44). On the Internet, the macro command is displayed together with a description of the function in a category classified form, so as to allow a user to search for a macro command he/she wishes to use, by utilizing a search function. Registration of a macro command parameter also takes place.

User registration unit 72 determines whether the received user ID matches a user ID of a user authorized to use the macro server 70 in advance. In other words, the user registration unit determines whether it is an authorized user ID or not (S46).

If it is an unauthorized user ID (YES in S46), the advanced user registration process is terminated. If it is not an unauthorized user ID (NO in S46), the user ID is registered in association with the macro command ID, with the data base unit 78 (S48). As the macro command ID and the user ID are registered in association with each other, the user identified by the user ID is authorized to execute the macro command identified by the macro command ID. Here, a plurality of users may be authorized to execute one macro command.

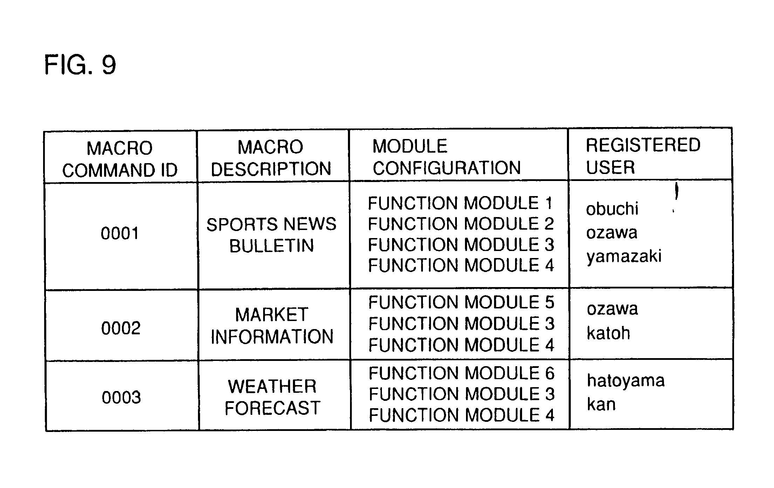

Referring to Fig. 9, data registered in the data base unit 78 will be described. In data base unit 78, a macro command ID, a description of the macro command, contents of function modules constituting the macro command and a user ID authorized to execute the macro command are registered for any one macro command. For example, the macro command identified by macro command ID "001" relates to "sports news bulletin", which is constituted by four function modules, that is, function modules 1 to 4. The users authorized to execute the macro command are specified by the user IDs "obuchi", "ozawa" and "yamazaki".

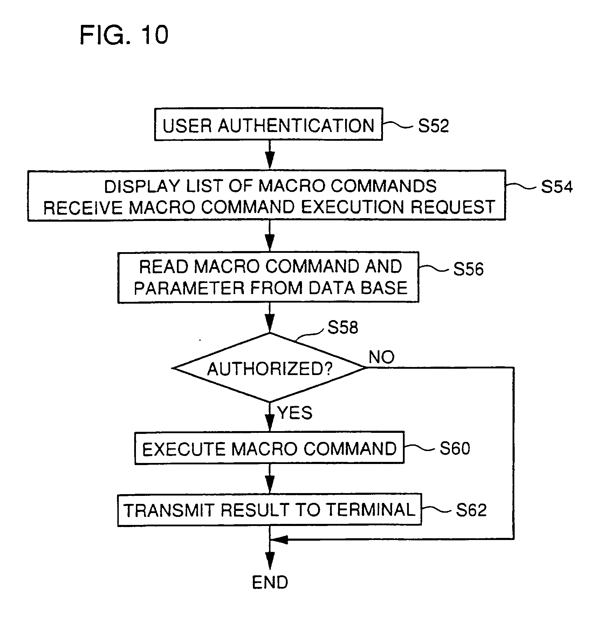

Referring to Fig. 10, the macro command executing process will be described. A user ID and a password are transmitted from the terminal to communication access control unit 74, and at user authentication unit 34, user authentication is conducted (S52). The process of step S52 is the same as that of step S12 in Fig. 3. Therefore, detailed description thereof will not be repeated here.

After user authentication, macro executing unit 44 reads macro command IDs of that macro command of which execution by the user of the input user ID is authorized, from data base unit 78, and displays, as a list, on the terminal through user authentication unit 34 and communication access control unit 74 (S54). On the Web page of the terminal, the macro command name and the description of the functions of the macro command, for example, are displayed. When a button corresponding to the macro command is clicked on the Web page, the macro command ID is transmitted from the terminal to communication access control unit 74.

When the terminal is provided with hardware buttons such as a button, a switch, a key, a slider or a wheel and the hardware buttons are allocated to macro command IDs in advance and have a function of transmitting to macro server 70, the macro command ID may be designated by pressing such a hardware button, rather than or in addition to the button on the Web page. A POS (Point of Sales) communication terminal for a special business type, for example, does not have the Web browser function but has a unique user interface utilizing hardware buttons. Therefore, the macro command ID is designated by this type of terminals utilizing the hardware buttons.

Macro executing unit 44 receives the macro command ID through communication access control unit 74 and user authentication unit 34, and reads the macro command designated by the macro command ID together with the parameter of the macro command from data base unit 78 (S56).

Macro executing unit 44 determines whether the user is authorized to execute the read macro command (S58). More specifically, whether the user ID registered in association with the macro command in the advanced user registration process matches the received user ID at the time of user authentication is determined. If the user is not authorized to execute the macro command (NO in S58), the macro command executing process is terminated.

If the user is authorized to execute the macro command (YES in S58), the macro command is converted to an executable program format by macro converting unit 42, and thereafter, the macro command is executed by macro executing unit 44 (S60). When a parameter is not set in the macro command, a process asking an input of the parameter to the terminal takes place simultaneously. An appropriate guidance and a character input field appear on the terminal browser, so that the user inputs a parameter therein and transmits to the macro server 70. When a process on a separate server is necessary in executing the macro command, macro executing unit 44 communicates with the separate server and performs the process.

Macro executing unit 44 transmits the result of execution to the terminal (S62), through user authentication unit 34 and communication access control unit 74.

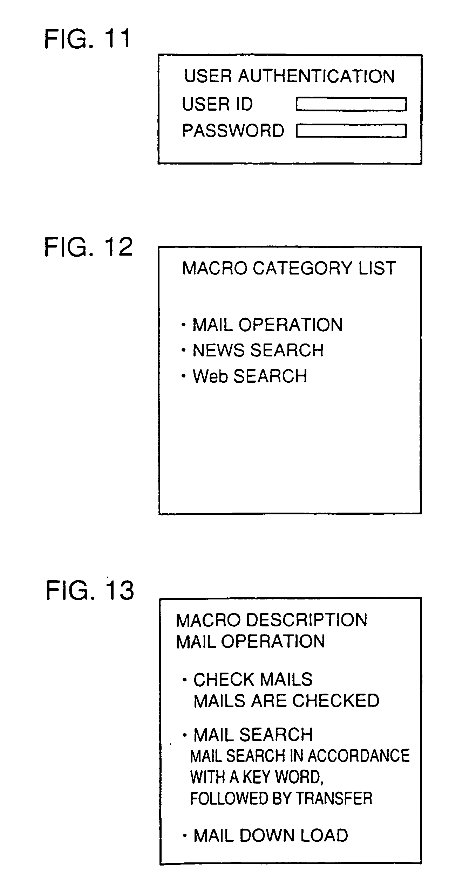

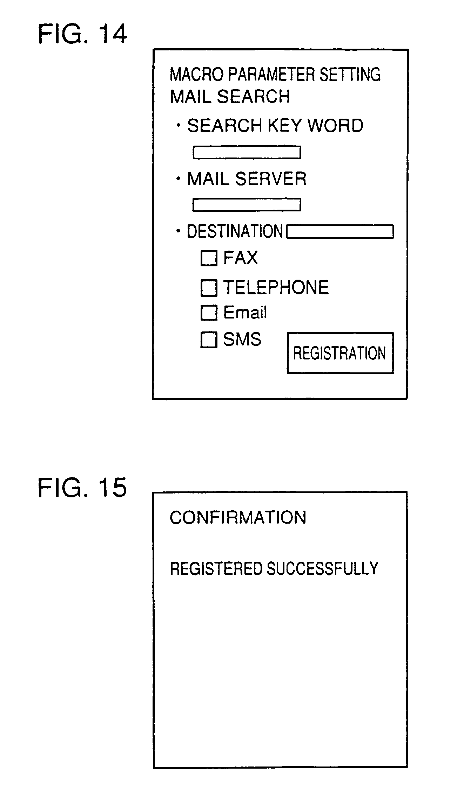

The advanced user registration process will be described in greater detail with reference to Figs. 11 to 17. In the process of S44 of Fig. 8, such a dialogue box as shown in Fig. 11 asking input of a user ID and a password, and a category list of macro commands such as shown in Fig. 12 appear on the terminal. When the user enters the user ID and the password and selects a desired category (here, "mail operation") on the dialogue box of Fig. 12, a list of macro commands and descriptions thereof appear, as shown in Fig. 13. When the user selects the macro command "mail search", then a dialogue box for setting parameters to execute the macro command "mail search" appears, and when the user sets necessary parameters and the presses "registration" button, the macro command ID and the parameter for the macro command "mail search" are transmitted to macro server 70, and the process proceeds to S46 of Fig. 8. If the user is not an unauthorized user (NO in S46) and user ID is registered successfully with the data base unit 78, a message box acknowledging registration such as shown in Fig. 15 appears on the terminal (S48).

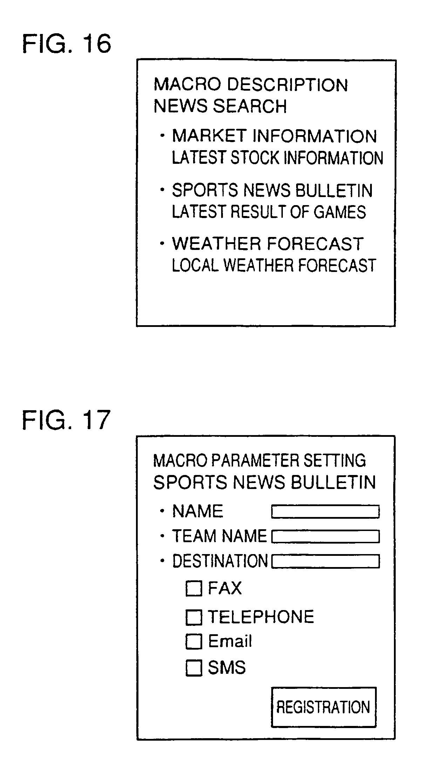

When "new search" is selected on the display of Fig. 12, a list of macro commands such as shown in Fig. 16 appears. When the macro command "sports news bulletin" is selected on the list of Fig. 16, a dialogue box asking setting of parameters to execute the macro command "sports news bulletin" such as shown in Fig. 17 appears. When the user sets necessary parameters and presses "registration" button, the macro command ID and the parameters for the macro command "sports news bulletin" are transmitted to macro server 70, and the process proceeds to S46 of Fig. 8. When the user ID is successfully registered with the data base unit 78 in the step S48 of Fig. 8, such a message as shown in Fig. 15 appears on the terminal.

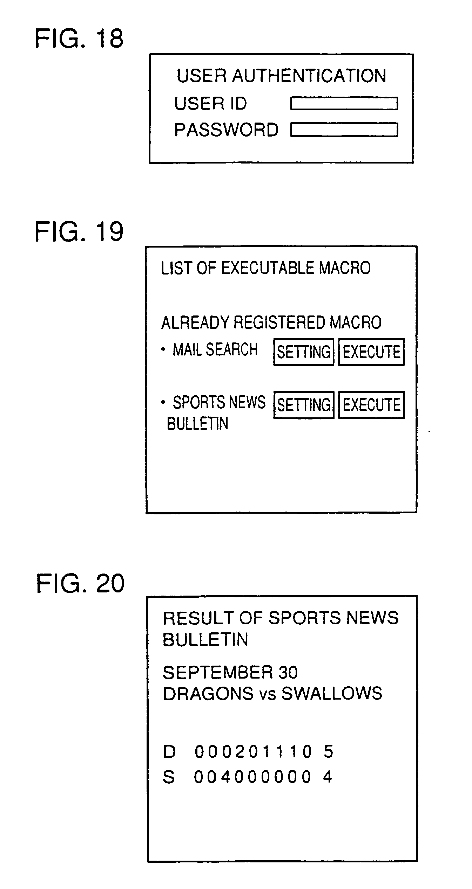

Referring to Figs. 18 to 20, the macro command executing process when the terminal has an Web browser environment such as in the case of a PC will be described in greater detail. In the process of S52 of Fig. 12, a user authentication dialogue box as shown in Fig. 18 appears. When the user enters the user ID and the password and the user authentication is conducted, a list of macro commands such as shown in Fig. 19 appears (S54 of Fig. 10). When the user presses "set" button of a macro command to be executed, a parameter setting dialogue box such as shown in Fig. 14 or 17 appears, allowing input of parameters. When the user presses "execute" button of the macro command to be executed, the macro command is executed (S60), and the result of execution is transmitted to the terminal (S62). When the "execute" button of the macro command "sports news bulletin" is pressed on the dialogue box of Fig. 19, the result of execution such as shown in Fig. 20 is transmitted to the terminal and displayed on the terminal.

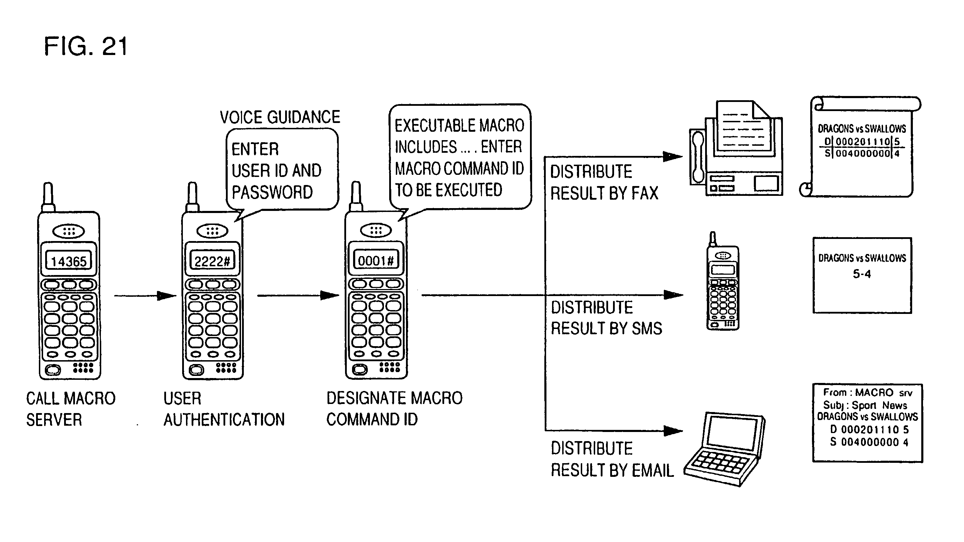

Referring to Fig. 21, the macro command executing process when the terminal is a telephone or the like which does not have the Web browser environment will be specifically described. When a call is made from the telephone to macro server 70, the automatic audio answering function of communication access control unit 74 provides the voice guidance of "please enter user ID and a password." When the user enters the user ID and the password by pressing keys of the telephone, DTMF signals are transmitted to macro server 70, and user authentication is conducted (S52 of Fig. 10). After user authentication, the automatic audio answering function of communication access control unit 74 reads a list of macro commands and a macro command ID input request, such as "executable macros include ... . Please enter a macro command ID to be executed." When the user enters the macro command ID, the DTMF signals are transmitted to macro server 70 (S54), and the process steps following S56 are executed. The macro execution result is transmitted to a terminal designated by the macro command (S62).

As described above, according to the data communication network service providing system in accordance with the present embodiment, it is possible for the user to utilize a macro command provided by a macro vendor. Therefore, it becomes possible to realize a macro command having rich functions by a simple operation.

### Fourth Embodiment

In the present embodiment, in addition to the user ID, personal information such as a telephone number, an information related to hobby, preference and the like of the user (hereinafter referred to as "user profile") are registered in the advanced user registration process. Based on the registered information, the macro server provides information which might be required or welcome by the user.

The data communication network service providing system in accordance with the present embodiment includes a terminal (not shown) such as an NonPC terminal or a portable telephone connected to the Internet, and a macro server, which will be described later, connected to the Internet and providing services to the terminal.

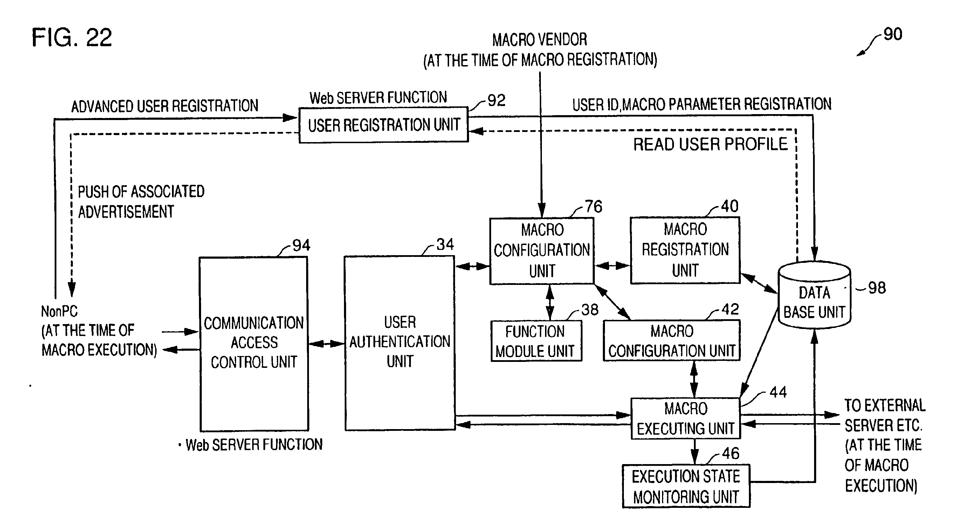

Referring to Fig. 22, a macro server 90 in accordance with the present invention includes: a user registration unit 92 for registration of a user ID, a parameter for a macro command and the user profile; a communication access control unit 94 having the Web server function providing communication interface with the NonPC terminal or the like; a user authentication unit 34 connected to communication access control unit 94; a function module unit 38; a macro configuration unit 76 connected to user authentication unit 34, function module unit 38, macro registration unit 40 and macro converting unit 42; the macro registration unit 40 connected to macro configuration unit 76; and a data base unit 98 connected to macro registration unit 40 and macro executing unit 44.

Macro server 90 further includes macro converting unit 42 connected to macro configuration unit 76 and macro executing unit 44; macro executing unit 44 connected to user authentication unit 34, macro converting unit 42 and data base unit 98; and execution state monitoring unit 46 connected to macro executing unit 44.

Components similar to those of the embodiments above will be denoted by the same reference characters. The names and functions are the same. Therefore, detailed description thereof will not be repeated here.

The macro command registration process is the same as that described with reference to Fig. 7. Therefore, detailed description thereof will not be repeated here.

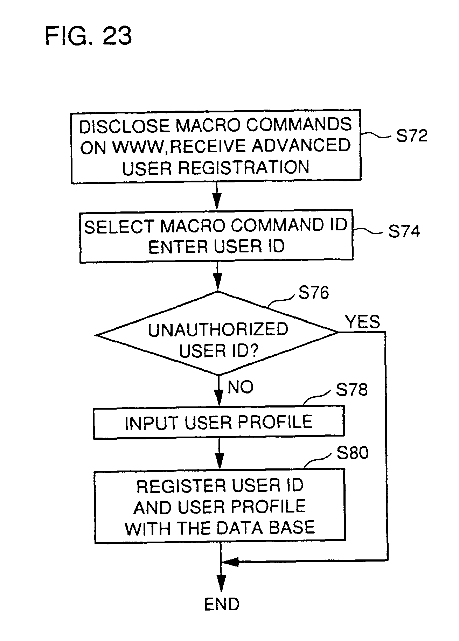

Referring to Fig. 23, the advanced user registration process will be described. The process steps S72 to S76 are the same as those of steps S42 to S46 of Fig. 19. Therefore, detailed description thereof will not be given here. When the input user ID is not an unauthorized user ID (NO in S76), the user profile is input through the terminal (S78). User registration unit 92 registers the input user ID and the user profile with the data base unit 98 (S80).

When an advanced user registration process for a macro command providing a travel plan, for example, is executed, user registration unit 92 displays a question "what is your favorite sport?" on the terminal, in the process step of S78. When the user answers "golf' in response, "golf' is added to the entry of "sports" of the user profile. When the macro command is executed thereafter, a travel plan allowing selection of a golf game as an option is offered to the user.

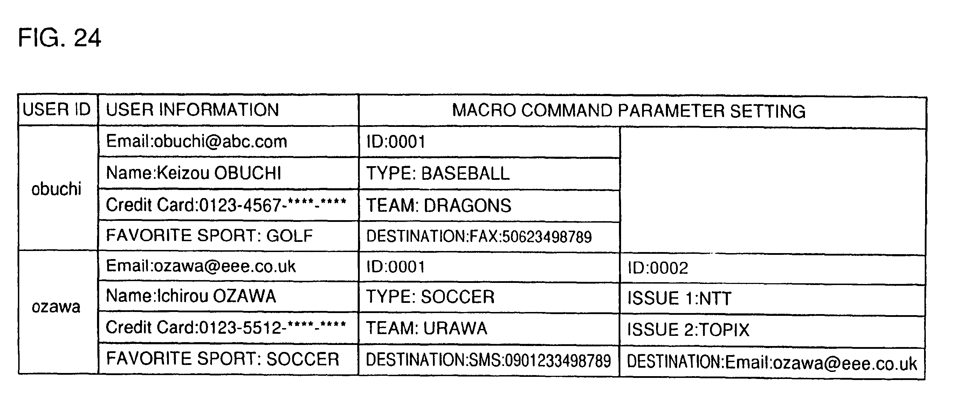

Referring to Fig. 24, the data registered in the data base unit 98 will be described. In the data base unit 98, in addition to the data related to the macro command shown in Fig. 9, the user profile registered in the process of S80 of Fig. 23 is also registered. For one user ID, an electronic mail address, name in English, credit card number, favorite sport and the like are registered as the user profile. Further, a parameter for the macro command is registered for each user ID. For example, the user identified by the user ID "ozawa" has an electronic mail address "ozawa@eee.co.uk" and his favorite sport is soccer.

A macro vendor may configure various macro commands utilizing such user profiles. For example, push distribution of travel guide advertisement to users who love travels is possible. The push type information transmitting technique is well known. Therefore, details will not be given here.

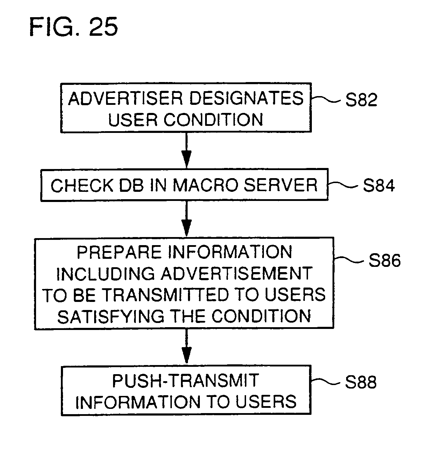

The process performed in accordance with the macro command for the advertisement distribution will be described with reference to Fig. 25.

An advertiser sets a user search condition in a macro command (S82), macro executing unit 44 searches user profiles of data base unit 98 and extracts a user(s) matching the user search condition (S84). Macro executing unit 44 prepares information of an advertisement or the like to be transmitted to the user who satisfies the user search condition (S86). Macro executing unit 44 push-transmits the prepared information to the extracted user (S88).

The advertiser knows in advance the configuration of the information stored in data base unit 98, and knows which type of information of the user may be registered in the data base unit 98. In view of privacy, the specific contents of the user profile is not known to the advertiser.

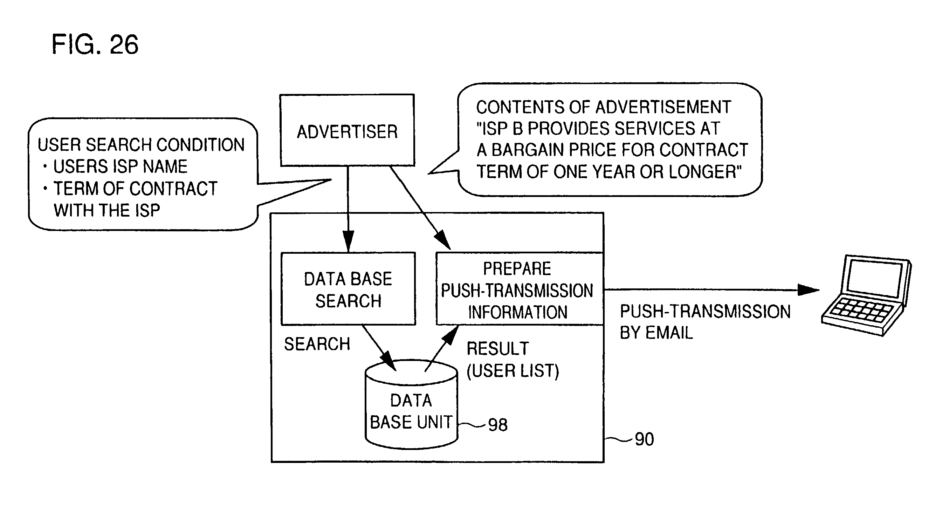

A macro command for push-transmitting an advertisement of a data communication network service provider providing services at a bargain from an advertiser will be described as another example. Assume that the advertiser is an ISP (Internet Service Provider) company B. It is assumed that the user profile of data base unit 98 contains user's ISP name and expiration of the term of service providing contract. The name of the user's ISP may be specified by the user's electronic mail address. Referring to Fig. 26, the advertiser sets a specific ISP and the term of contract as the user's search condition (S82 of Fig. 25). Macro executing unit 44 searches the user profile of data base unit 98, and extracts any user who has contracted with the ISP designated in the search condition and the term of contract of whom is longer than the term set in the user search condition (S84). Macro executing unit 44 prepares information to be sent to the extracted user, for example, "ISP B provides services at a bargain price if use for one year or more" (S86). Macro executing unit push-transmits the prepared information to the electronic mail address registered in the user profile (S88).

Similar advertisement is possible using a portable telephone. It is possible to specify a communication service provider from the telephone number of the portable telephone and to transmit a similar advertisement dependent on the term of contract of the portable telephone.

User registration unit 72 may be omitted from macro server 70. In that case, the advanced user registration process of Fig. 8 does not take place. Therefore, in the process of step S54 shown in Fig. 10, all the macro commands registered with the data base unit 98 are displayed. The list of the macro commands is in such a form as shown in Fig. 12 or 13. More specifically, the category list of the macro commands such as shown in Fig. 12 appears, and when a desired category is selected in the dialogue box of Fig. 12, the list of macro commands and corresponding descriptions such as shown in Fig. 13 appear.

Such a manner of display in which all the macro commands are displayed is not very convenient when a specific command is frequently executed. Such a manner of display, however, allows execution of a macro command for which user registration has not been made, in a macro server 70 having user registration unit 72. Therefore, when a macro command which is rarely executed is to be selected, this manner is effective, as troublesome advanced user registration process is unnecessary.

As described above, according to the data communication network service providing system of the present embodiment, the user profile is registered in advance in the data base, and the macro command is executed in accordance with the user data base.

For a macro command push-transmitting an advertisement to a specific user, for example, the advertiser sets a user search condition related to the advertisement to be transmitted in macro server 90. In this manner, the advertisement is automatically push-transmitted to users matching the users search condition. Therefore, it is possible for the advertiser to transmit advertisement to only those users who might be interested in such an advertisement, and hence better response to the advertisement is expected. For the user, it is advantageous as the information of interest is provided without delay. As the information of the user profile is not disclosed to the advertiser, user's privacy is maintained.

### Fifth Embodiment

The macro server constituting the data communication network service providing system in accordance with the present embodiment is the same as that of the fourth embodiment. Therefore, detailed description thereof will not be repeated here.

The macro command in accordance with the fourth module is configured by using the function modules stored in function module unit 38. In the present embodiment, a function module prepared uniquely by a macro vendor is provided to macro server 90, so as to offer a macro command of higher performance to the user.

As the macro vendor provides a function module to macro server 90, the function of macro server 90 is extended. When a third party wishes to use the function module provided by the macro vendor, the macro vendor may require some compensation from the third party in exchange.

Services provided over the Internet develop day by day. Therefore, it is not practical for an administrator of macro server 90 to provide services by daily updating function modules and the macro commands.

Therefore, sometimes it is more efficient to use services provided by already existing servers, and sometimes services of higher quality may be available. A macro vendor provides a function module realizing an interface with a server providing a service (hereinafter referred to as a "service server"). On macro server 90, a macro command is configured using the function module.

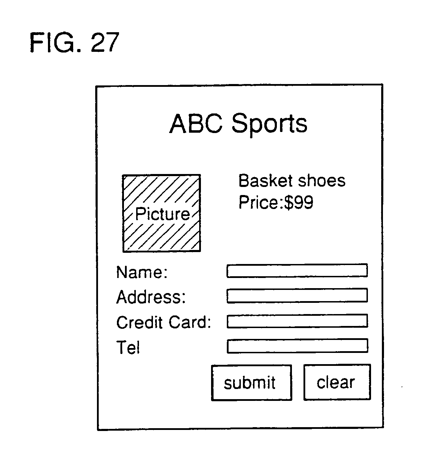

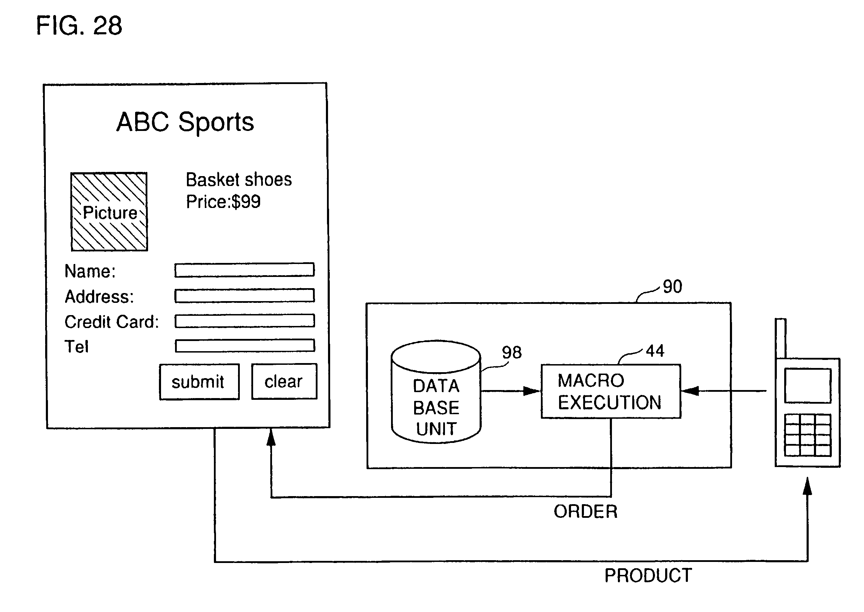

Referring to Figs. 27 and 28, on-line shopping service of sports goods will be described. Sports goods manufacturer A provides on-line shopping service of sports goods on the Internet, and accepts payment by credit cards. Therefore, it is essential that the users name, address, credit card number and the telephone number in addition to the product name are input to the service server, when placing an order of a product. The macro vendor provides to the macro server 90, a function module requesting input of name and the like when placing an order, such as shown in Fig. 27. Using the function module, the macro vendor prepares a macro command for the on line shopping service of sports goods.

The user goes through the advanced user registration process described with reference to Fig. 23 for the setting to use the macro command of the on line shopping. At this time, the user name, address, credit number and the telephone number are set as the user profile.

Referring to Fig. 28, for the on-line shopping, the user accesses macro server 90 from a terminal such as a portable telephone, and executes the macro command. Macro executing unit 44 executes a function module that notifies the user name and the like to the service server, when the macro command is executed. At this time, if the user name and the like are registered in the user profile of data base unit 98, the name and the like are automatically notified to the service server.

When an order is placed, the service server ships the product to the customer, and accepts payment by the credit card.

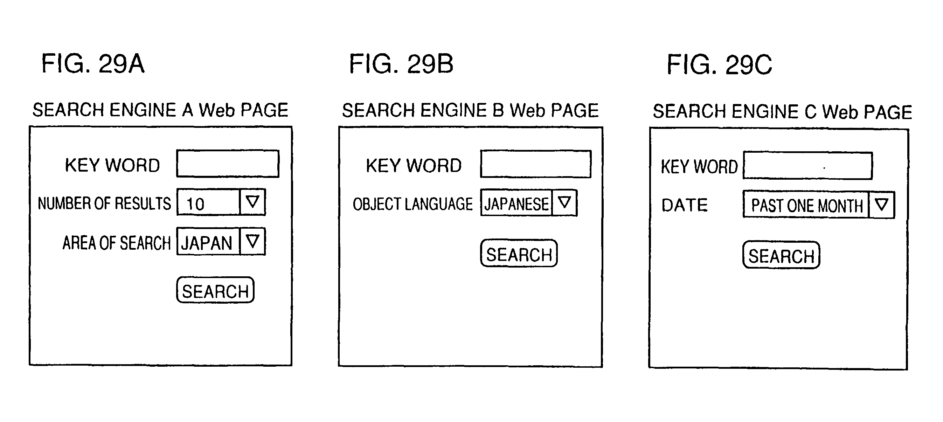

A service for performing Web page search using a plurality of WWW search engines with only one input will be described as another example, with reference to Figs. 29A to 31.

There are search servers providing various Web page search services on the Internet. For example, referring to Fig. 29A, when the key word, the number of results and the object of search are input, a Web page using search engine A searches objects based on the key word, and information of Web pages within the specified result number is displayed. Referring to Fig. 29B, the Web page using search engine B searches, when a search key word and the search object language are input, Web pages described in the search object language based on the search key word, and the result of search is displayed. Referring to Fig. 29C, the Web page using search engine C searches, when a search key word and the search object date are input, Web pages satisfying the condition of the search object date and the search key word, and the result of search is displayed.

The macro vendor provides function modules incorporating interfaces with the above described three search engines.

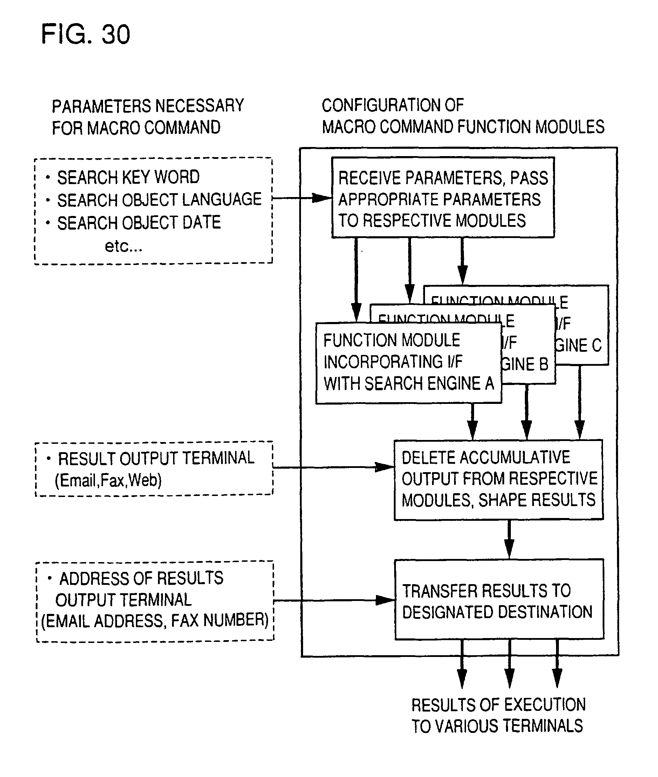

Referring to Fig. 30, a macro command is configured by using function modules realizing various functions, in addition to the three function modules provided from the macro vendor. The functions of the macro command are as follows. First, parameters required by the three search engines including the search key word, the search object language, the search object date and so on are received from the user. Necessary parameters are passed to respective function modules incorporating interfaces with respective search engines. The form of the search key word may differ module by module. For example, a character string "AND" or a sign "&" may be used for an AND search. Therefore, the search key word is modified appropriately for each function module.

The three function modules incorporating the interfaces with respective search engines apply the received parameters to the Web pages providing the search services, and receive the results of search. The results of search from three function modules are received, accumulative search results and the like are deleted, and the search results are shaped to be adapted for the display form of the result output terminal. More specifically, when the result of search is to be notified by an electronic mail, image data, for example, is deleted, and the result of search in text format is prepared. When the result of search is to be notified by FAX, the result of search is converted to image data. When the result of search is to be notified as a Web page on a PC, the result of search is converted to HTML (Hyper Text Markup Language) format.

The result of search shaped to the form matching the output terminal is transferred to an address (electronic mail address, FAX number or the like) of the result output terminal.

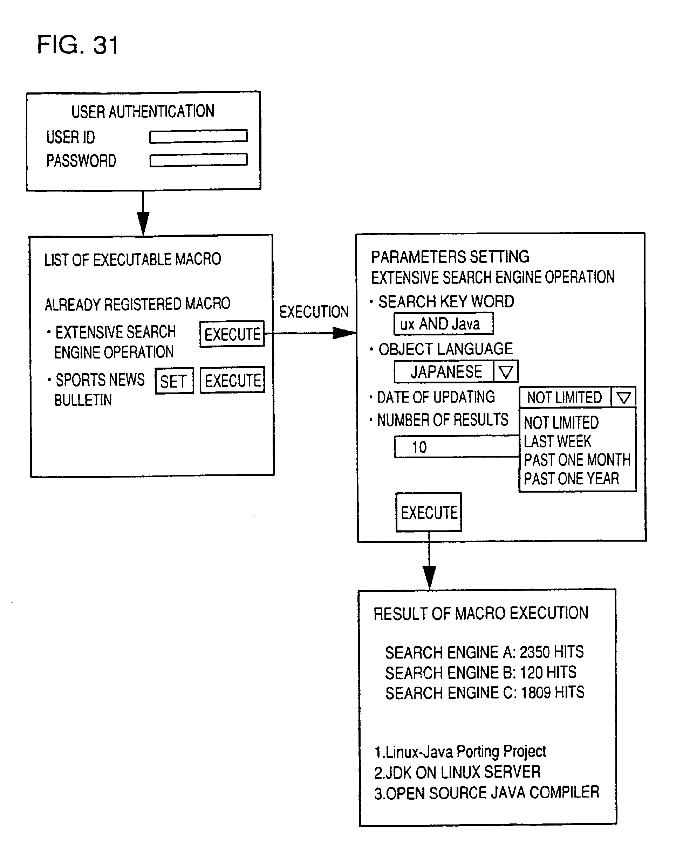

Referring to Fig. 31, the operation by the user when the macro command for searching Web pages from a terminal having the Web browser environment such as PC will be described. First, the user authentication process is performed in which a user ID and a password are received from the terminal, and whether the user ID and the password are registered or not is determined. After user authentication, a list of executable macro commands is displayed. When the user presses "execute" button to select the above described macro command "extensive search engine operation" from the list, a dialogue box allowing setting of parameters appears. The user inputs various parameters including a search key word, a search object language, a date of updating and the number of results to be displayed, on the parameter setting dialogue box, and presses "execute" button. Then, Web pages are searched by the three function modules, the result of search is shaped and the result of search is displayed on the screen.

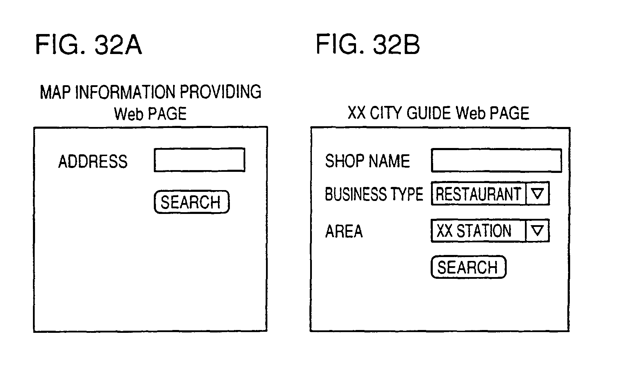

A service of providing shop information on a map as another example will be described with reference to Figs. 32A to 34.

Referring to Fig. 32A, there is a Web page displaying a map or outputting location (latitude and the longitude) corresponding to an address input by the user (hereinafter referred to as "map information providing Web page"). There is also a Web page outputting an address of a shop when the name of the shop, or business type and area are input (hereinafter referred to as "city guide Web page"). Using these two Web pages, it is possible to locate a shop from its name on a map, for example. For this purpose, however, two steps of operations are necessary. Namely, first, the address must be searched using the city guide Web page, and thereafter, the address must be displayed on the map by the map information providing Web page. These are rather complicated operations for the user.

Therefore, a macro command for performing these processes at once is prepared. The macro vendor provides function modules for communication with the two Web pages.

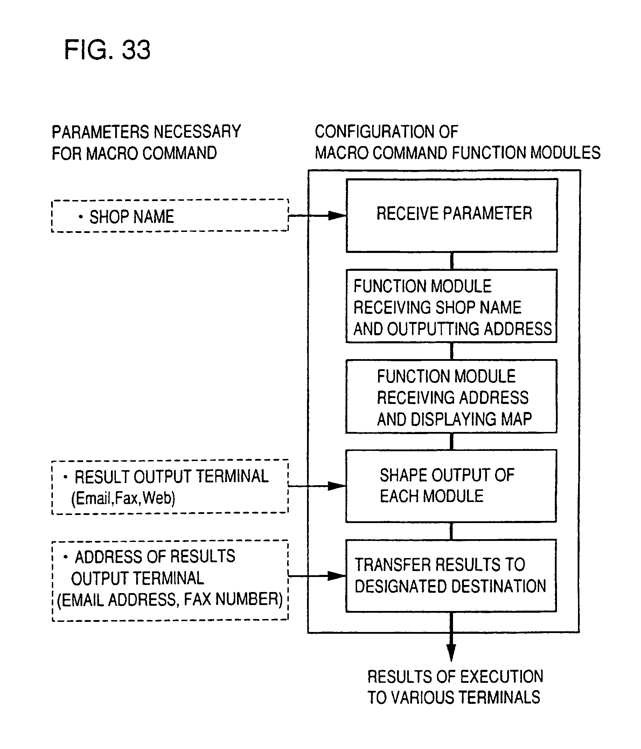

Referring to Fig. 33, an example of the macro command will be described. A parameter (shop name) is received from the user, and the parameter is passed to the function module accessing the city guide Web page.

The function module, receiving the parameter, notifies the shop name to the city guide Web page, obtains the address of the shop, and passes the address to the function module accessing to the map information providing Web page. The function module accessing the map information providing Web page passes the received address to the map information providing Web page, and obtains a map.

The obtained map is shaped to be in compliance with the display format of the result output terminal. The shaped map is transferred to the address of the result output terminal.

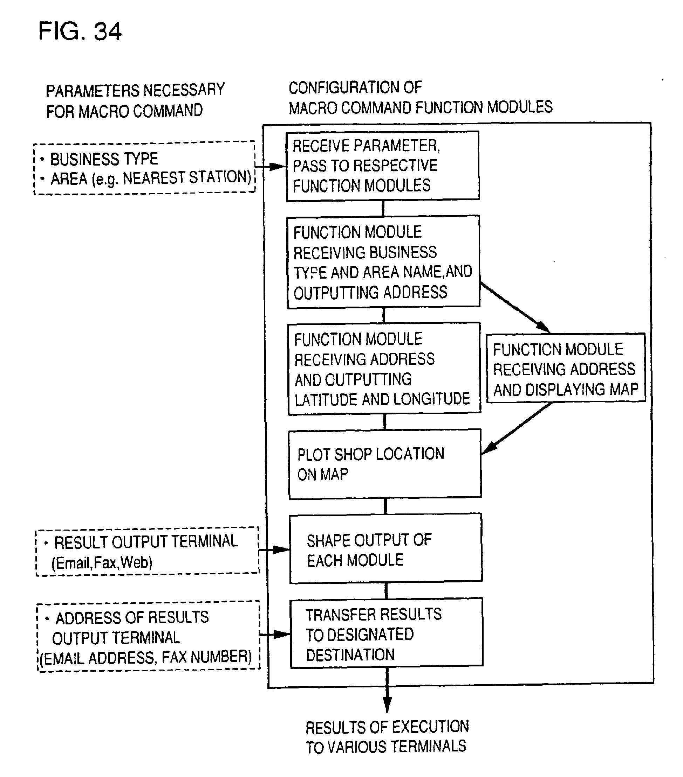

Another example of the macro command will be described with reference to Fig. 34. A parameter (business type and area (nearest station or the like)) is received from the user, and the parameter is passed to the function module accessing to the city guide Web page.

The function module, receiving the parameter, notifies the business type and area to the city guide Web page, obtains the address of the shop, and passes the address to two function modules accessing the map information providing Web page. One of the function modules passes the address to the map information providing Web page, so as to obtain the latitude and the longitude of the address. The other function module passes the address to the map information providing Web page, and obtains the map.

Based on the outputs from the two function modules, the position of the shop is plotted on the map. The map on which the shop position is plotted is shaped to be in compliance with the display format of the output terminal, and the shaped map is transferred to the address of the result output terminal.

As described above, as the user profile is registered in advance, it is possible to enjoy services such as the on line shopping, without the necessity of troublesome input of name, address and the like.

In this manner, by utilizing function modules provided by a macro vendor, a macro command having higher function can be configured.

Although the present invention has been described and illustrated in detail, it is clearly understood that the same is by way of illustration and example only and is not to be taken by way of limitation and scope of the present invention being limited only by the terms of the appended claims.

## Claims

1. A data communication network service providing system, comprising:
a macro server (30, 70, 90) connected to an external server or the like;
a terminal (52, 54) connected to said macro server (30, 70, 90); wherein
said macro server (30, 70, 90) includes:
a communication unit (32, 34) being adapted to control communication with said terminal (52, 54),
a data base unit (48, 78, 98) being adapted to store a macro command, and
a macro executing unit (44) connected to said data base unit (48, 78, 98) and said communication unit (32, 34) and being adapted to execute said macro command in response to an instruction from said terminal (52, 54) and to transmit a result of execution to said terminal (52, 54),
**characterized in that**
said terminal (52, 54) is connected to said macro server (30, 70, 90) through a data communication network, that
said communication unit (32, 34) is adapted to control communication with said terminal (52, 54) through said data communication network, and that
said macro server (30, 70, 90) further includes:
a user authentication unit (34) connected to said communication unit (32, 34) and being adapted to perform user authentication based on a user ID transmitted from said terminal (52, 54) through said data communication network,
a function module unit (38) being adapted to store a function module and implementing a predetermined function,
a macro configuration unit (36, 76) connected to said communication unit (32, 34) and said function module unit (38) and being adapted to configure a macro command for performing a series of processes prepared by combining function modules, and
a macro registration unit (40) connected to said macro configuration unit (36, 76) and said data base unit (48, 78, 98) and being adapted to register said macro command with said data base unit (48, 78, 98).

2. The data communication network service providing system according to claim 1, wherein said macro server (70,90) further includes a user registration unit (72,92) connected to said data base unit (78,98), and registering a user ID of a user authorized to use the macro command registered in said data base unit (78,98), in accordance with an instruction from said terminal (52,54).

3. The data communication network service providing system according to claim 2, wherein said user registration unit (72,92) registers information related to the user together with registration of said user ID.

4. The data communication network service providing system according to claim 3, wherein said macro command is a macro command for performing network distribution of advertisement associated with said information related to the user.

5. The data communication network service providing system according to claim 3, wherein said information related to the user includes an electronic mail address of a data communication network service provider with which the user has contracted up and the term of contract, and
said macro command is a macro command for providing information related to a data communication network service provider to said user, based on said electronic mail address and said term of contract.

6. The data communication network service providing system according to claim 3, wherein
said information related to the user includes information related to a telephone number of a portable telephone with which the user has contracted, and information related to the term of contract, and
said macro command is a macro command for providing information related to a portable telephone to said user, based on the telephone number of said portable telephone and the term of contract.

7. The data communication network service providing system according to claim 3, wherein said information related to the user includes user name and an address for delivery, and
said macro command is a macro command for receiving an order of a product from the user, transmitting said user name and said address for delivery to a server providing an on line shopping service, and placing said order of the product.

8. The data communication network service providing system according to claim 1, wherein
said function module unit (38) stores a first function module accessing to an electronic mail server, a second function module performing a prescribed process on an electronic mail stored in said electronic mail server, and a third function module setting a method of notification of a result of processing on said electronic mail, and
said macro command is a macro command prepared by at least one of said first to third function modules.

9. The data communication network service providing system according to claim 1, wherein
said function module unit (38) stores a first function module accessing a data base server, a second function module performing data search based on a search key word, a third function module setting an output format of a result of search, and a fourth function module setting a method of notification of the search result, and
said macro command is a macro command prepared by combining at least one of said first to fourth function modules.

10. The data communication network service providing system according to claim 1, wherein
said function module unit (38) includes a first function module accessing to a first search server providing a Web page search service and obtaining a result of search, a second function module accessing to a second search server providing a Web page search service different from the first search server and obtaining a search result, a third function module receiving a search condition and passing a search condition required by said first and second search servers respectively to said first and second function modules, and a fourth function module receiving results of search from said first and second function modules and deleting accumulative search results, and
said macro command is a macro command prepared by combining said first to fourth function modules.

11. The data communication network service providing system according to claim 1, wherein
said function module unit (38) includes a first function module accessing to a server computer outputting an address based on a search condition, a second function module accessing to a server computer outputting a map based on an address and obtaining a map, and a third function module receiving a search condition and passing the condition to said first function module, and
said macro command is a macro command prepared by combining said first to third function modules.

12. The data communication network service providing system according to claim 1, wherein
said function module unit (38) includes a first function module accessing a server computer outputting an address based on a search condition and obtaining an address, a second function module accessing a server computer outputting a map based on an address and obtaining a map, a third function module outputting a position based on an address, a fourth function module indicating a designated position on a map, and a fifth function module receiving a search condition and passing the condition to said first function module, and
said macro command is a macro command prepared by combining said first to fifth function modules.

13. The data communication network service providing system according to claim 1, wherein said macro command is provided by a vendor configuring a macro command.

14. The data communication network service providing system according to claim 1, wherein said function module is provided by a vendor configuring a macro command.

15. The data communication network service providing system according to claim 1, wherein said macro server (30,70,90) further includes an execution state monitoring unit (46) connected to the macro executing unit (44), and monitoring a state of execution of the macro command.

16. A macro server used in a data communication network service providing system comprising a macro server (30, 70, 90) connected to a terminal (52, 54) and to an external server or the like being adapted to execute a prescribed process in accordance with an instruction from said terminal (52, 54) and to transmit a result of execution to said terminal (52, 54),
said macro server (30, 70, 90) including:
a communication unit (32, 34) being adapted to control communication with said terminal (52, 54),
a data base unit (48, 78, 98) being adapted to store a macro command, and
a macro executing unit (44) connected to said data base unit (48, 78, 98) and said communication unit (32, 34) and being adapted to execute said macro command in response to an instruction from said terminal (52, 54) and to transmit a result of execution to said terminal (52,54),
**characterized in that**
said terminal (52, 54) is connected to said macro server (30, 70, 90) through a data communication network, that
said communication unit (32, 34) is adapted to control communication with said terminal (52, 54) through said data communication network, and that
said macro server (30, 70, 90) further includes:
a user authentication unit (34) connected to said communication unit (32, 34) and being adapted to perform user authentication based on a user ID transmitted from said terminal (52, 54) through said data communication network,
a function module unit (38) being adapted to store a function module implementing a predetermined function,
a macro configuration unit (36, 76) connected to said communication unit (32, 34) and said function module unit (38) and being adapted to configure a macro command for performing a series of processes prepared by combining function modules, and
a macro registration unit (40) connected to said macro configuration unit (36, 76) and said data base unit (48, 78, 98) and being adapted to register said macro command with said data base unit (48, 78, 98).

17. The macro server according to claim 16, further comprising
a user registration unit (72,92) connected to said data base unit (78,98), and registering a user ID of a user authorized to use a macro command registered in said data base unit (78,98) in accordance with an instruction from said terminal (52,54).

18. The macro server according to claim 17, wherein said user registration unit (72,92) registers information related to the user together with registration of said user ID.

19. The macro server according to claim 18, wherein said macro command is a macro command for performing network distribution of advertisement associated with said information related to the user.

20. The macro server according to claim 18, wherein said information related to the user includes an electronic mail address of a data communication network provider with which the user has contracted and the term of contract, and
said macro command is a macro command for providing information related to a data communication network service provider to said user, based on said electronic mail address and said term of contract.

21. The macro server according to claim 18, wherein
said information related to the user includes information related to a telephone number of a portable telephone with which the user has contracted, and information related to the term of contract, and
said macro command is a macro command for providing information related to a portable telephone to said user, based on the telephone number of said portable telephone and the term of contract.

22. The macro server according to claim 18, wherein
said information related to the user includes user name and an address for delivery, and
said macro command is a macro command for receiving an order of a product from the user, transmitting said user name and said address for delivery to a server providing an on-line shopping service, and placing said order of the product.

23. The macro server according to claim 16, wherein
said function module unit (38) stores a first function module accessing to an electronic mail server, a second function module performing a prescribed process on an electronic mail stored in said electronic mail server, and a third function module setting a method of notification of a result of processing on said electronic mail, and
said macro command is a macro command prepared by at least one of said first to third function modules.

24. The macro server according to claim 16, wherein
said function module unit (38) stores a first function module accessing to a data base server, a second function module performing data search based on a search key word, a third function module setting an output format of a result of search, and a fourth function module setting a method of notification of the search result, and
said macro command is a macro command prepared by combining at least one of said first to fourth function modules.

25. The macro server according to claim 16, wherein
said function module unit (38) includes a first function module accessing to a first search server providing a Web page search service and obtaining a result of search, a second function module accessing to a second search server providing a Web page search service different from the first search server and obtaining a search result, a third function module receiving a search condition, and passing a search condition required by said first and second search servers respectively to said first and second function modules, and a fourth function module receiving results of search from said first and second function modules and deleting accumulative search results, and
said macro command is a macro command prepared by combining said first to fourth function modules.

26. The macro server according to claim 16, wherein
said function module unit (38) includes a first function module accessing to a server computer outputting an address based on a search condition, a second function module accessing to a server computer outputting a map based on an address and obtaining a map, and a third function module receiving a search condition and passing the condition to said first function module, and
said macro command is a macro command prepared by combining said first to third function modules.

27. The macro server according to claim 16, wherein
said function module unit (38) includes a first function module accessing to a server computer outputting an address based on a search condition and obtaining an address, a second function module accessing to a server computer outputting a map based on an address and obtaining a map, a third function module outputting a position based on an address, a fourth function module indicating a designated position on a map, and a fifth function module receiving a search condition and passing the condition to said first function module, and
said macro command is a macro command prepared by combining said first to fifth function modules.

28. The macro server according to claim 16, wherein said macro command is provided by a vendor configuring a macro command.

29. The macro server according to claim 16, wherein said function module is provided by a vendor configuring a macro command.

30. The macro server according to claim 16, wherein said macro server further includes an execution state monitoring unit (46) connected to the macro executing unit (44), and monitoring a state of execution of the macro command.

31. A data communication network service providing method used in a data communication network service providing system comprising a macro server (30, 70, 90) connected to a terminal (52, 54) and to an external server or the like for executing a prescribed process in accordance with an instruction from said terminal (52, 54) and transmitting a result of execution to said terminal (52, 54), wherein said macro server (30, 70, 90) includes
a communication unit (32, 34) for controlling communication with said terminal (52, 54),
a data base unit (48, 78, 98) storing a macro command, and
a macro executing unit (44) connected to said data base unit (48, 78, 98) and said communication unit (32, 34) for executing said process,
**characterized by** the steps of:
connecting said terminal (52, 54) to said macro server (30, 70, 90) through a data communication network,
controlling communication with said terminal (52, 54) through said data communication network by said communication unit (32, 34),
performing a user authentication based on a user ID transmitted from said terminal (52, 54),
storing in a function module unit (38) a function module implementing a predetermined function,
configuring a macro command for performing a series of processes prepared by combining function modules by a macro configuration unit (36, 76) connected to said communication unit (32, 34) and said function module unit (38), and
registering said macro command with said data base unit (48, 78, 98) by a macro registration unit (40) connected to said macro configuration unit (36, 76) and said data base unit (48, 78, 98).

32. The data communication network service providing method according to claim 31, further comprising the step of registering a user ID of a user authorized to use said macro command.

33. The data communication network service providing method according to claim 32, wherein said step of registering user ID includes the step of registering said user ID and information related to the user.

34. The data communication network service providing method according to claim 33, wherein said step of executing said macro command includes the step of network-distributing an advertisement associated with said information related to the user.

35. The data communication network service providing method according to claim 33, wherein said information related to the user includes an electronic mail address of a data communication network service provider with which the user has contracted and the term of contract, and
said step of executing said macro command includes the step of providing information related to a data communication network service provider providing a service at a bargain price to said user, based on said electronic mail address and said term of contract.

36. The data communication network service providing method according to claim 33, wherein said information related to said user includes a telephone number of a portable telephone with which the user has contracted and the term of contract, and
said step of executing said macro command includes the step of providing information related to a portable telephone providing a service at a bargain price to said user, based on the telephone number of said portable telephone and the term of contract.

37. The data communication network service providing method according to claim 33, wherein
said information related to the user includes a user name and an address for delivery, and
said step of executing said macro command includes the step of receiving an order of a product from a user, transmitting said user name and the address for delivery to a server providing an on-line shopping service, and placing an order of said product.

38. The data communication network service providing method according to claim 31, wherein said function module includes a first function module accessing to an electronic mail server, a second function module performing a prescribed process on an electronic mail stored in said electronic mail server, and a third function module setting a method of notification of a result of the process on said electronic mail, and
said step of executing said macro command includes the step of executing a macro command prepared by combining at least one of said first to third function modules.

39. The data communication network service providing method according to claim 31, wherein
said function module includes a first function module accessing to a data base server, a second function module performing data search based on a search key word, a third function module setting an output format of a result of search, and a fourth function module setting a method of notification of the search result, and
said step of executing said macro command includes the step of executing a macro command prepared by combining at least one of said first to fourth function modules.

40. The data communication network service providing method according to claim 31, wherein said function module includes a first function module accessing to a first search server providing a Web page search service and obtaining a result of search, a second function module accessing to a second search server providing a Web page search service different from the first search server and obtaining a search result, a third function module receiving a search condition and passing the search condition required by said first and second search service respectively to said first and second function modules respectively, and a fourth function module receiving results of search from said first and second function modules and deleting accumulative search results, and
said step of executing said macro command includes the step of executing a macro command prepared by combining said first to fourth function modules.

41. The data communication network service providing method according to claim 31, wherein
said function module includes a first function module accessing to a server computer outputting an address based on a search condition and obtaining an address, a second function module accessing to a server computer outputting a map based on an address and obtaining a map, and a third function module receiving a search condition and passing the condition to said first function module, and
said step of executing said macro command includes the step of executing a macro command prepared by combining said first to third function modules.

42. The data communication network service providing method according to claim 31, wherein said function module includes a first function module accessing to a server computer outputting an address based on a search condition and obtaining an address, a second function module accessing to a server computer outputting a map based on an address and obtaining a map, a third module outputting a position based on an address, a fourth function module indicating a designated position on a map, and a fifth function module receiving a search condition and passing the condition to said first function module, and
said step of executing said macro command includes the step of executing a macro command prepared by combining said first to fifth function modules.

43. The data communication network service providing method according to claim 31, wherein said macro command is provided by a vendor configuring a macro command.

44. The data communication network service providing method according to claim 31, wherein said function module is provided by a vendor configuring a macro command.

45. The data communication network service providing method according to claim 31, further comprising the step of monitoring a state of execution of said macro command.

## Patentansprüche

1. System zum Bereitstellen eines Datenkommunikationsnetzwerkdienstes, umfassend:
einen Makroserver (30, 70, 90), der mit einem externen Server oder desgleichen verbunden ist;
ein mit dem Makroserver (30, 70, 90) verbundenes Endgerät (52, 54);
wobei der Makroserver (30, 70, 90) enthält:
eine Kommunikationseinheit (32, 34) zur Steuerung der Kommunikation mit dem Endgerät (52, 54),
eine Datenbankeinheit (48, 78, 98) zur Speicherung eines Makrobefehls; und
eine Makro-Ausführeinheit (44), die mit der Datenbankeinheit (48, 78, 98) und der Kommunikationseinheit (32, 34) verbunden ist und zur Ausführung des Makrobefehls als Antwort auf eine Anweisung von dem Endgerät (52, 54) und zur Übermittlung eines Ergebnisses der Ausführung an das Endgerät (52, 54) geeignet ist,
**dadurch gekennzeichnet, dass**
das Endgerät (52, 54) mit dem Makroserver (30, 70, 90) über ein Datenkommunikationsnetzwerk verbunden ist, und dass
die Kommunikationseinheit (32, 34) sich zur Steuerung der Kommunikation mit dem Endgerät (52, 54) über das Datenkommunikationsnetzwerk eignet, und dass
der Makroserver (30, 70, 90) zusätzlich beinhaltet:
eine Nutzer-Authentifikationseinheit (34), die mit der Kommunikationseinheit (32, 34) verbunden ist, zur Durchführung einer Nutzer-Authentifikation auf Basis einer Nutzer-ID, welche von dem Endgerät (52, 54) über das Datenkommunikationsnetzwerk übermittelt wird,
eine Funktionsmoduleinheit (38) zum Speichern eines Funktionsmoduls und Umsetzen einer vorgegebenen Funktion,
eine Makro-Konfigurationseinheit (36, 76), die mit der Kommunikationseinheit (32, 34) und der Funktionsmoduleinheit (38) verbunden ist, zur Konfiguration eines Makrobefehls zum Durchführen einer Abfolge von Verarbeitungen, die durch Kombinieren von Funktionsmodulen bereitgestellt werden, und
eine mit der Makro-Konfigurationseinheit (36, 76) und der Datenbankeinheit (48, 78, 98) verbundene Makro-Registriereinheit (40) zum Registrieren des Makrobefehls mit der Datenbankeinheit (48, 78, 98).

2. System zum Bereitstellen eines Datenkommunikationsnetzwerkdienstes gemäß Anspruch 1, wobei der Makroserver (70, 90) zusätzlich eine Nutzer-Registriereinheit (72, 92) aufweist, die mit der Datenbankeinheit (78, 98) verbunden ist und entsprechend einer Anweisung vom Endgerät (52, 54) eine Nutzer-ID registriert, wobei der Nutzer zur Benutzung des in der Datenbankeinheit (78, 98) registrierten Makrobefehls authorisiert ist.

3. System zum Bereitstellen eines Datenkommunikationsnetzwerkdienstes nach Anspruch 2, wobei die Nutzer-Registriereinheit (72, 92) Information registriert, die sich auf den Nutzer zusammen mit der Registrierung der Nutzer-ID bezieht.

4. System zum Bereitstellen eines Datenkommunikationsnetzwerkdienstes nach Anspruch 3, wobei der Makrobefehl ein Makrobefehl zur Verbreitung von Werbung im Netwerk ist, wobei die Werbung mit der den Nutzer betreffenden Information verknüpft ist.

5. System zum Bereitstellen eines Datenkommunikationsnetzwerkdienstes nach Anspruch 3, wobei die mit dem Nutzer verknüpfte Information eine elektronische Mailadresse eines Datenkommunikationsnetzwerkdienst-Providers, an den sich der Nutzer vertraglich gebunden hat, und die Vertragslaufzeit beinhaltet, und
der Makrobefehl ein Makrobefehl ist zum Bereitstellen, basierend auf der elektronischen Mailadresse und der Vertragslaufzeit, von einen Datenkommunikationsnetzwerkdienst-Provider betreffender Information an den Nutzer.

6. System zum Bereitstellen eines Datenkommunikationsnetzwerkdienstes nach Anspruch 3; wobei
die mit dem Nutzer verknüpfte Information eine die Telefonnummer eines tragbaren Telefons, an das der Nutzer vertraglich gebunden ist, betreffende Information und eine die Vertragslaufzeit betreffende Information beinhaltet, und
der Makrobefehl ein Makrobefehl ist zum Bereitstellen, basierend auf der Telefonnummer des tragbaren Telefons und der Vertragslaufzeit, von ein tragbares Telefon betreffender Information an den Nutzer.

7. System zum Bereitstellen eines Datenkommunikationsnetzwerkdienstes nach Anspruch 3, wobei die den Nutzer betreffende Information einen Nutzernamen und eine Zustellungsadresse beinhaltet, und
der Makrobefehl ein Makrobefehl ist zum Empfangen einer Produktbestellung seitens des Nutzers, Übermitteln des Nutzernamens und der Zustellungsadresse an einen Server, der einen Online-Einkaufsservice anbietet, und Einstellen der Produktbestellung.

8. System zum Bereitstellen eines Datenkommunikationsnetzwerkdienstes nach Anspruch 1, wobei
die Funktionsmoduleinheit (38) ein erstes Funktionsmodul, das auf einen elektronischen Mailserver zugreift, ein zweites Funktionsmodul, das eine vorgegebene Verarbeitung in Bezug auf eine in dem elektronischen Mailserver gespeicherte elektronische Mail durchführt, und ein drittes Funktionsmodul, das ein Verfahren zum Mitteilen eines Ergebnisses der Verarbeitung der elektronischen Mail festlegt, speichert, und
der Makrobefehl ein Makrobefehl ist, der durch wenigstens eines der ersten bis dritten Funktionsmodule erstellt wird.

9. System zum Bereitstellen eines Datenkommunikationsnetzwerkdienstes nach Anspruch 1, wobei
die Funktionsmoduleinheit (38) ein erstes Funktionsmodul, das auf einen Datenbankserver zugreift, ein zweites Funktionsmodul, das eine Datensuche basierend auf einem Suchschlüsselwort durchführt, ein drittes Fünktionsmodul, das ein Ausgabeformat eines Suchergebnisses bestimmt, und ein viertes Funktionsmodul, das ein Verfahren zum Mitteilen des Suchergebnisses festlegt, speichert, und
der Makrobefehl ein Makrobefehl ist, der durch Kombinieren von wenigstens einem der ersten bis vierten Funktionsmodule erstellt wird.

10. System zum Bereitstellen eines Datenkommunikationsnetzwerkdienstes nach Anspruch 1, wobei
die Funktionsmoduleinheit (38) ein erstes Funktionsmodul, das auf einen ersten einen Webseiten-Suchdienst bereitstellenden Suchserver zugreift und ein Suchergebnis erhält, ein zweites Funktionsmodul, das auf einen vom ersten Suchserver verschiedenen zweiten Suchserver, der einen Webseiten-Suchdienst bereitstellt, zugreift und ein Suchergebnis erhält, ein drittes Funktionsmodul, das eine Suchbedingung empfängt und eine von jeweils den ersten und zweiten Suchservern benötigte Suchbedingung an die ersten und zweiten Funktionsmodule weitergibt, und ein viertes Funktionsmodul, das Suchergebnisse von den ersten und zweiten Funktionsmodulen empfängt und sich anhäufende Suchergebnisse löscht, umfasst, und
der Makrobefehl ein Makrobefehl ist, der durch Kombinieren der ersten bis vierten Funktionsmodule erstellt wird.

11. System zum Bereitstellen eines Datenkommunikationsnetzwerkdienstes nach Anspruch 1, wobei
die Funktionsmoduleinheit (38) ein erstes Funktionsmodul, das auf einen Serverrechner zugreift, der eine auf einer Suchbedingung basierende Adresse ausgibt, ein zweites Funktionsmodul, das auf einen Serverrechner, der eine auf einer Adresse basierende Karte ausgibt, zugreift und eine Karte erhält, und ein drittes Funktionsmodul, das eine Suchbedingung empfängt und die Bedingung an das erste Funktionsmodul weitergibt, umfasst, und
der Makrobefehl ein Makrobefehl ist, der durch Kombinieren der ersten bis dritten Funktionsmodule erstellt wird.

12. System zum Bereitstellen eines Datenkommunikationsnetzwerkdienstes nach Anspruch 1, wobei
die Funktionsmoduleinheit (38) ein erstes Funktionsmodul, das auf einen Serverrechner, der eine Adresse basierend auf einer Suchbedingung ausgibt, zugreift und eine Adresse empfängt, ein zweites Funktionsmodul, das auf einen Serverrechner, der eine Karte basierend auf einer Adresse ausgibt, zugreift und eine Karte empfängt, ein drittes Funktionsmodul, das eine Position basierend auf einer Adresse ausgibt, ein viertes Funktionsmodul, das auf eine ausgewiesene Position auf einer Karte hinweist, und ein fünftes Funktionsmodul, das eine Suchbedingung empfängt und die Bedingung an das erste Funktionsmodul weitergibt, umfasst, und
der Makrobefehl ein Makrobefehl ist, der durch Kombinieren der ersten bis fünften Funktionsmodule erstellt wird.

13. System zum Bereitstellen eines Datenkommunikationsnetzwerkdienstes nach Anspruch 1, wobei der Makrobefehl von einem Anbieter, der einen Makrobefehl festlegt, bereitgestellt wird.

14. System zum Bereitstellen eines Datenkommunikationsnetzwerkdienstes nach Anspruch 1, wobei das Funktionsmodul von einem Anbieter bereitgestellt wird, der einen Makrobefehl festlegt.

15. System zum Bereitstellen eines Datenkommunikationsnetzwerkdienstes nach Anspruch 1, wobei der Makroserver (30, 70, 90) zudem eine Ausführungszustands-Monitoreinheit (46) enthält, die mit der Makro-Ausführungseinheit (44) verbunden ist und einen Ausführungszustand des Makrobefehls überwacht.

16. Makroserver, der in einem System zum Bereitstellen eines Datenkommunikationsnetzwerkdienstes einschließlich eines mit einem Endgerät (52, 54) und einem externen Server oder desgleichen verbundenen Makroserver (30, 70, 90) verwendet wird und sich zur Ausführung einer vorgegebenen Verarbeitung entsprechend einer Anweisung von dem Endgerät (52, 54) und zum Übermitteln eines Ausführungsergebnisses an das Endgerät (52, 54) eignet,
wobei der Makroserver (30, 70, 90) umfasst:
eine Kommunikationseinheit (32, 34) zur Steuerung der Kommunikation mit dem Endgerät (52, 54),
eine Datenbankeinheit (48, 78, 98) zur Speicherung eines Makrobefehls; und
eine Makro-Ausführeinheit (44), die mit der Datenbankeinheit (48, 78, 98) und der Kommunikationseinheit (32, 34) verbunden ist und zur Ausführung des Makrobefehls als Antwort auf eine Anweisung von dem Endgerät (52, 54) und zur Übermittlung eines Ergebnisses der Ausführung an das Endgerät (52, 54) geeignet ist,
**dadurch gekennzeichnet, dass**
das Endgerät (52, 54) mit dem Makroserver (30, 70, 90) über ein Datenkommunikationsnetzwerk verbunden ist, und dass
die Kommunikationseinheit (32, 34) sich zur Steuerung der Kommunikation mit dem Endgerät (52, 54) über das Datenkommunikationsnetzwerk eignet, und dass
der Makroserver (30, 70, 90) zusätzlich beinhaltet:
eine Nutzer-Authentifikationseinheit (34), die mit der Kommunikationseinheit (32, 34) verbunden ist, zur Durchführung einer Nutzer-Authentifikation auf Basis einer Nutzer-ID, welche von dem Endgerät (52, 54) über das Datenkommunikationsnetzwerk übermittelt wird,
eine Funktionsmoduleinheit (38) zum Speichern eines Funktionsmoduls und Umsetzen einer vorgegebenen Funktion,
eine Makro-Konfigurationseinheit (36, 76), die mit der Kommunikationseinheit (32, 34) und der Funktionsmoduleinheit (38) verbunden ist, zur Konfiguration eines Makrobefehls zum Durchführen einer Abfolge von Verarbeitungen, die durch Kombinieren von Funktionsmodulen bereitgestellt werden, und
eine mit der Makro-Konfigurationseinheit (36, 76) und der Datenbankeinheit (48, 78, 98) verbundene Makro-Registriereinheit (40) zum Registrieren des Makrobefehls mit der Datenbankeinheit (48, 78, 98).

17. Makroserver nach Anspruch 16, zusätzlich umfassend:
eine mit der Datenbankeinheit (78, 98) verbundene Nutzer-Registriereinheit (72, 92), die eine Nutzer-ID eines zur Benutzung eines in der Datenbankeinheit (78, 98) registrierten Makrobefehls authorisierten Nutzers gemäß einer Anweisung von dem Endgerät (52, 54) registriert.

18. Makroserver nach Anspruch 17, wobei die Nutzer-Registriereinheit (72, 92) mit dem Nutzer verknüpfte Information zusammen mit der Registrierung der Nutzer-ID registriert.

19. Makroserver nach Anspruch 18, wobei der Makrobefehl ein Makrobefehl zum Verbreiten von Werbung im Netzwerk ist, wobei die Werbung mit der den Nutzer betreffenden Information verknüpft ist.

20. Makroserver nach Anspruch 18, wobei die mit dem Nutzer verknüpfte Information eine elektronische Mailadresse eines Datenkommunikationsnetzwerkdienst-Providers, an den sich der Nutzer vertraglich gebunden hat, und die Vertragslaufzeit beinhaltet, und
der Makrobefehl ein Makrobefehl ist zum Bereitstellen, basierend auf der elektronischen Mailadresse und der Vertragslaufzeit, von einen Datenkommunikationsnetzwerkdienst-Provider betreffender Information an den Nutzer.

21. Makroserver nach Anspruch 18, wobei
die mit dem Nutzer verknüpfte Information eine die Telefonnummer eines tragbaren Telefons, an das der Nutzer vertraglich gebunden ist, betreffende Information und eine die Vertragslaufzeit betreffende Information beinhaltet, und
der Makrobefehl ein Malcrobefehl ist zum Bereitstellen, basierend auf der Telefonnummer des tragbaren Telefons und der Vertragslaufzeit, von ein tragbares Telefon betreffender Information an den Nutzer.

22. Makroserver nach Anspruch 18, wobei die den Nutzer betreffende Information einen Nutzernamen und eine Zustellungsadresse beinhaltet, und
der Makrobefehl ein Makrobefehl ist zum Empfangen einer Produktbestellung seitens des Nutzers, Übermitteln des Nutzernamens und der Zustellungsadresse an einen Server, der einen Online-Einkaufsservice anbietet, und Einstellen der Produktbestellung.

23. Makroserver nach Anspruch 16, wobei
die Funktionsmoduleinheit (38) ein erstes Funktionsmodul, das auf einen elektronischen Mailserver zugreift, ein zweites Funktionsmodul, das eine vorgegebene Verarbeitung in Bezug auf eine in dem elektronischen Mailserver gespeicherte elektronische Mail durchführt, und ein drittes Funktionsmodul, das ein Verfahren zum Mitteilen eines Ergebnisses der Verarbeitung der elektronischen Mail festlegt, speichert, und
der Makrobefehl ein Makrobefehl ist, der durch wenigstens eines der ersten bis dritten Funktionsmodule erstellt wird.

24. Makroserver nach Anspruch 16, wobei
die Funktionsmoduleinheit (38) ein erstes Funktionsmodul, das auf einen Datenbankserver zugreift, ein zweites Funktionsmodul, das eine Datensuche basierend auf einem Suchschlüsselwort durchführt, ein drittes Funktionsmodul, das ein Ausgabeformat eines Suchergebnisses bestimmt, und ein viertes Funktionsmodul, das ein Verfahren zum Mitteilen des Suchergebnisses festlegt, speichert, und
der Makrobefehl ein Makrobefehl ist, der durch Kombinieren von wenigstens einem der ersten bis vierten Funktionsmodule erstellt wird.

25. Makroserver nach Anspruch 16, wobei
die Funktionsmoduleinheit (38) ein erstes Funktionsmodul, das auf einen ersten einen Webseiten-Suchdienst bereitstellenden Suchserver zugreift und ein Suchergebnis erhält, ein zweites Funktionsmodul, das auf einen vom ersten Suchserver verschiedenen zweiten Suchserver, der einen Webseiten-Suchdienst bereitstellt, zugreift und ein Suchergebnis erhält, ein drittes Funktionsmodul, das eine Suchbedingung empfängt und eine von jeweils den ersten und zweiten Suchservern benötigte Suchbedingung an die ersten und zweiten Funktionsmodule weitergibt, und ein viertes Funktionsmodul, das Suchergebnisse von den ersten und zweiten Funktionsmodulen empfängt und sich anhäufende Suchergebnisse löscht, umfasst, und
der Makrobefehl ein Makrobefehl ist, der durch Kombinieren der ersten bis vierten Funktionsmodule erstellt wird.

26. Makroserver nach Anspruch 16, wobei
die Funktionsmoduleinheit (38) ein erstes Funktionsmodul, das auf einen Serverrechner zugreift, der eine auf einer Suchbedingung basierende Adresse ausgibt, ein zweites Funktionsmodul, das auf einen Serverrechner, der eine auf einer Adresse basierende Karte ausgibt, zugreift und eine Karte erhält, und ein drittes Funktionsmodul, das eine Suchbedingung empfängt und die Bedingung an das erste Funktionsmodul weitergibt, umfasst, und
der Makrobefehl ein Makrobefehl ist, der durch Kombinieren der ersten bis dritten Funktionsmodule erstellt wird.

27. Makroserver nach Anspruch 16, wobei
die Funktionsmoduleinheit (38) ein erstes Funktionsmodul, das auf einen Serverrechner, der eine Adresse basierend auf einer Suchbedingung ausgibt, zugreift und eine Adresse empfängt, ein zweites Funktionsmodul, das auf einen Serverrechner, der eine Karte basierend auf einer Adresse ausgibt, zugreift und eine Karte empfängt, ein drittes Funktionsmodul, das eine Position basierend auf einer Adresse ausgibt, ein viertes Funktionsmodul, das auf eine ausgewiesene Position auf einer Karte hinweist, und ein fünftes Funktionsmodul, das eine Suchbedingung empfängt und die Bedingung an das erste Funktionsmodul weitergibt, umfasst, und
der Makrobefehl ein Makrobefehl ist, der durch Kombinieren der ersten bis fünften Funktionsmodule erstellt wird.

28. Makroserver nach Anspruch 16, wobei der Makrobefehl von einem Anbieter, der einen Makrobefehl festlegt, bereitgestellt wird.

29. Makroserver nach Anspruch 16, wobei das Funktionsmodul von einem Anbieter bereitgestellt wird, der einen Makrobefehl festlegt.

30. Makroserver nach Anspruch 16, wobei der Makroserver (30, 70, 90) zudem eine Ausführungszustands-Monitoreinheit (46) enthält, die mit der Makro-Ausführungseinheit (44) verbunden ist und einen Ausführungszustand des Makrobefehls überwacht.

31. Verfahren zum Bereitstellen eines Datenkommunikationsnetzwerkdienstes, das in einem System zum Bereitstellen eines Datenkommunikationsnetzwerkdienstes verwendet wird, wobei das System einen mit einem Endgerät (52, 54) und mit einem externen Server oder desgleichen verbundenen Makroserver (30, 70, 90) aufweist zum Ausführen einer entsprechend einer Anweisung von einem Endgerät (52, 54) vorgegebenen Verarbeitung und zum Übermitteln eines Ausführungsergebnisses an das Endgerät (52, 54), wobei der Makroserver (30, 70, 90) umfasst:
eine Kommunikationseinheit (32, 34) zum Steuern der Kommunikation mit dem Endgerät (52, 54),
eine Datenbankeinheit (48, 78, 98) zum Speichern eines Makrobefehls, und
eine mit der Datenbankeinheit (48, 78, 98) und der Kommunikationseinheit (32, 34) verbundene Makro-Ausführungseinheit (44) zum Ausführen der Verarbeitung,
**gekennzeichnet durch** die Schritte:
Verbinden des Endgeräts (52, 54) mit dem Makroserver (30, 70, 90) über ein Datenkommunikationsnetzwerk,
Steuern der Kommunikation mit dem Endgerät (52, 54) über das Datenkommunikationsnetzwerk **durch** die Kommunikationseinheit (32, 34),
Durchführen einer Nutzer-Authentifikation basierend auf der vom Endgerät (52, 54) übermittelten Nutzer-ID,
Speichern eines eine vorgegebene Funktion umsetzenden Funktionsmoduls in einer Funktionsmoduleinheit (38),
Festlegen eines Makrobefehls zum Durchführen einer Abfolge von Verarbeitungen, die **durch** Kombinieren von Funktionsmodulen **durch** eine Makro-Konfigurationseinheit (36, 76) erstellt werden, wobei die Makro-Konfigurationseinheit (36, 76) mit der Kommunikationseinheit (32, 34) und der Funktionsmoduleinheit (38) verbunden ist, und
Registrieren des Makrobefehls mit der Datenbankeinheit (48, 78, 98) über eine Makro-Registriereinheit (40), die mit der Makro-Konfigurationseinheit (36, 76) und der Datenbankeinheit (48, 78, 98) verbunden ist.

32. Verfahren zum Bereitstellen eines Datenkommunikationsnetzwerkdienstes nach Anspruch 31, zusätzlich umfassend den Schritt Registrieren einer Nutzer-ID eines Nutzers, der zur Verwendung des Makrobefehls authorisiert ist.

33. Verfahren zum Bereitstellen eines Datenkommunikationsnetzwerkdienstes nach Anspruch 32, wobei der Schritt Registrieren der Nutzer-ID den Schritt Registrieren der Nutzer-ID und einer den Nutzer betreffenden Information umfasst.

34. Verfahren zum Bereitstellen eines Datenkommunikationsnetzwerkdienstes nach Anspruch 33, wobei der Schritt Ausführen des Makrobefehls den Schritt Verbreiten einer Werbung im Netzwerk umfasst, die mit der den Nutzer betreffenden Information verknüpft ist.

35. Verfahren zum Bereitstellen eines Datenkommunikationsnetzwerkdienstes nach Anspruch 33,
wobei die mit dem Nutzer verknüpfte Information eine elektronische Mailadresse eines Datenkommunikationsnetzwerkdienst-Providers, an den sich der Nutzer vertraglich gebunden hat, und die Vertragslaufzeit beinhaltet, und
der Schritt Ausführen des Makrobefehls den Schritt Bereitstellen von Information umfasst, die einen Datenkommunikationsnetzwerkdienst-Provider betrifft, der dem Nutzer einen Dienst zu einem Angebotspreis bereitstellt, basierend auf der Mailadresse und der Vertragslaufzeit.

36. Verfahren zum Bereitstellen eines Datenkommunikationsnetzwerkdienstes nach Anspruch 33, wobei die den Nutzer betreffende Information eine Telefonnummer eines tragbaren Telefons, an das der Nutzer vertraglich gebunden ist, und die Vertragslaufzeit beinhaltet, und
der Schritt Ausführen des Makrobefehls den Schritt Bereitstellen von Information umfasst, die ein tragbares Telefon betrifft, das dem Nutzer einen Dienst zu einem Angebotspreis bereitstellt, basierend auf der Telefonnummer des tragbaren Telefons und der Vertragslaufzeit.

37. Verfahren zum Bereitstellen eines Datenkommunikationsnetzwerkdienstes nach Anspruch 33, wobei
die den Nutzer betreffende Information einen Nutzernamen und eine Zustellungsadresse beinhaltet, und
der Schritt Ausführen des Makrobefehls den Schritt Empfangen einer Produktbestellung von einem Nutzer, Übermitteln des Nutzernamens und der Zustellungsadresse an einen Online-Verkaufsdienste bereitstellenden Server und Einstellen der Produktbestellung umfasst.

38. Verfahren zum Bereitstellen eines Datenkommunikationsnetzwerkdienstes nach Anspruch 31, wobei das Funktionsmodul ein erstes Funktionsmodul, das auf einen elektronischen Mailserver zugreift, ein zweites Funktionsmodul, das eine vorgegebene Verarbeitung in Bezug auf eine in dem elektronischen Mailserver gespeicherte elektronische Mail durchführt, und ein drittes Funktionsmodul, das ein Verfahren zum Mitteilen eines Ergebnisses der Verarbeitung der elektronischen Mail festlegt, umfasst, und
der Schritt Ausführen des Makrobefehls den Schritt Ausführen eines Makrobefehls, der durch wenigstens eines der ersten bis dritten Funktionsmodule erstellt wird, umfasst.

39. Verfahren zum Bereitstellen eines Datenkommunikationsnetzwerkdienstes nach Anspruch 31, wobei
das Funktionsmodul ein erstes Funktionsmodul, das auf einen Datenbankserver zugreift, ein zweites Funktionsmodul, das eine Datensuche basierend auf einem Suchschlüsselwort durchführt, ein drittes Funktionsmodul, das ein Ausgabeformat eines Suchergebnisses bestimmt, und ein viertes Funktionsmodul, das ein Verfahren zum Mitteilen des Suchergebnisses festlegt, umfasst, und
der Schritt Ausführen des Makrobefehls den Schritt Ausführen eines Makrobefehls, der durch Kombinieren von wenigstens einem der ersten bis vierten Funktionsmodule erstellt wird, umfasst.

40. Verfahren zum Bereitstellen eines Datenkommunikationsnetzwerkdienstes nach Anspruch 31, wobei das Funktionsmodul ein erstes Funktionsmodul, das auf einen ersten einen Webseiten-Suchdienst bereitstellenden Suchserver zugreift und ein Suchergebnis erhält, ein zweites Funktionsmodul, das auf einen vom ersten Suchserver verschiedenen zweiten Suchserver, der einen Webseiten-Suchdienst bereitstellt, zugreift und ein Suchergebnis erhält, ein drittes Funktionsmodul, das eine Suchbedingung empfängt und die von jeweils den ersten und zweiten Suchservern benötigte Suchbedingung an die ersten und zweiten Funktionsmodule weitergibt, und ein viertes Funktionsmodul, das Suchergebnisse von den ersten und zweiten Funktionsmodulen empfängt und sich anhäufende Suchergebnisse löscht, umfasst, und
der Schritt Ausführen des Makrobefehls den Schritt Ausführen eines Makrobefehls, der durch Kombinieren von wenigstens einem der ersten bis vierten Funktionsmodule erstellt wird, umfasst.

41. Verfahren zum Bereitstellen eines Datenkommunikationsnetzwerkdienstes nach Anspruch 31, wobei
das Funktionsmodul ein erstes Funlctionsmodul, das auf einen Serverrechner, der eine auf einer Suchbedingung basierende Adresse ausgibt, zugreift und eine Adresse erhält, ein zweites Funktionsmodul, das auf einen Serverrechner, der eine auf einer Adresse basierende Karte ausgibt, zugreift und eine Karte erhält, und ein drittes Funktionsmodul, das eine Suchbedingung empfängt und die Bedingung an das erste Funktionsmodul weitergibt, umfasst, und
der Schritt Ausführen des Makrobefehls den Schritt Ausführen eines Makrobefehls, der durch Kombinieren der ersten bis dritten Funktionsmodule erstellt wird, umfasst.

42. Verfahren zum Bereitstellen eines Datenkommunikationsnetzwerkdienstes nach Anspruch 31, wobei
das Funktionsmodul ein erstes Funktionsmodul, das auf einen Serverrechner, der eine Adresse basierend auf einer Suchbedingung ausgibt, zugreift und eine Adresse empfängt, ein zweites Funktionsmodul, das auf einen Serverrechner, der eine Karte basierend auf einer Adresse ausgibt, zugreift und eine Karte empfängt, ein drittes Funktionsmodul, das eine Position basierend auf einer Adresse ausgibt, ein viertes Funktionsmodul, das auf eine ausgewiesene Position auf einer Karte hinweist, und ein fünftes Funktionsmodul, das eine Suchbedingung empfängt und die Bedingung an das erste Funktionsmodul weitergibt, umfasst, und
der Schritt Ausführen des Makrobefehls den Schritt Ausführen eines Makrobefehls, der durch Kombinieren der ersten bis fünften Funktionsmodule erstellt wird, umfasst.

43. Verfahren zum Bereitstellen eines Datenkommunikationsnetzwerkdienstes nach Anspruch 31, wobei der Makrobefehl von einem Anbieter, der einen Makrobefehl festlegt, bereitgestellt wird.

44. Verfahren zum Bereitstellen eines Datenkommunikationsnetzwerkdienstes nach Anspruch 31, wobei das Funktionsmodul von einem Anbieter bereitgestellt wird, der einen Makrobefehl festlegt.

45. Verfahren zum Bereitstellen eines Datenkommunikationsnetzwerkdienstes nach Anspruch 31, zusätzlich umfassend den Schritt Überwachen eines Ausführungszustands des Makrobefehls.

## Revendications

1. Système de fourniture de services de réseau de communication de données, comprenant :
un serveur de macro (30, 70, 90) relié à un serveur externe ou analogue ;
un terminal (52, 54) relié audit serveur de macro (30, 70, 90) ; dans lequel
ledit serveur de macro (30, 70, 90) comprend:
une unité de communication (32, 34) adaptée pour commander les communications avec ledit terminal (52, 54),
une unité de base de données (48, 78, 98) adaptée pour stocker une macro-commande, et
une unité d'exécution de macro (44) reliée à ladite unité de base de données (48, 78, 98) et à ladite unité de communication (32, 34) et adaptée pour exécuter ladite macro-commande en réponse à une instruction en provenance dudit terminal (52, 54) et pour transmettre un résultat de l'exécution audit terminal (52, 54),
**caractérisé en ce que**
ledit terminal (52, 54) est relié audit serveur de macro (30, 70, 90) par l'intermédiaire d'un réseau de communication de données,
ladite unité de communication (32, 34) est adaptée pour commander les communications avec ledit terminal (52, 54) par l'intermédiaire dudit réseau de communication de données, et **en ce que**
ledit serveur de macro (30, 70, 90) comprend en outre :
une unité d'authentification d'utilisateur (34) reliée à ladite unité de communication (32, 34) et adaptée pour exécuter une authentification d'utilisateur sur la base d'un identifiant d'utilisateur transmis à partir dudit terminal (52, 54) par l'intermédiaire dudit réseau de communication de données,
une unité de module de fonction (38) adaptée pour stocker un module de fonction et implémentant une fonction prédéterminée,
une unité de configuration de macro (36, 76) reliée à ladite unité de communication (32, 34) et à ladite unité de module de fonction (38) et adaptée pour configurer une macro-commande afin d'exécuter une série de processus préparés par la combinaison de modules de fonction, et
une unité d'enregistrement de macro (40) reliée à ladite unité de configuration de macro (36, 76) et à ladite unité de base de données (48, 78, 98) et adaptée pour enregistrer ladite macro-commande dans ladite unité de base de données (48, 78, 98).

2. Système de fourniture de services de réseau de communication de données selon la revendication 1, dans lequel ledit serveur de macro (70, 90) comprend en outre une unité d'enregistrement d'utilisateur (72, 92) reliée à ladite unité de base de données (78, 98) et enregistrant un identifiant d'utilisateur d'un utilisateur autorisé à utiliser la macro-commande enregistrée dans ladite unité de base de données (78, 98) conformément à une instruction en provenance dudit terminal (52, 54).

3. Système de fourniture de services de réseau de communication de données selon la revendication 2, dans lequel ladite unité d'enregistrement d'utilisateur (72, 92) enregistre des informations relatives à l'utilisateur conjointement avec l'enregistrement dudit identifiant d'utilisateur.

4. Système de fourniture de services de réseau de communication de données selon la revendication 3, dans lequel ladite macro-commande est une macro-commande servant à effectuer la distribution, sur le réseau, de messages publicitaires associés auxdites informations relatives à l'utilisateur.

5. Système de fourniture de services de réseau de communication de données selon la revendication 3, dans lequel lesdites informations relatives à l'utilisateur comprennent une adresse de courrier électronique d'un fournisseur de services de réseau de communication de données avec lequel l'utilisateur a un contrat, ainsi que la durée du contrat, et
ladite macro-commande est une macro-commande servant à fournir audit utilisateur des informations relatives à un fournisseur de services de réseau de communication de données, sur la base de ladite adresse de courrier électronique et de ladite durée du contrat.

6. Système de fourniture de services de réseau de communication de données selon la revendication 3, dans lequel
lesdites informations relatives à l'utilisateur comprennent des informations relatives à un numéro de téléphone d'un téléphone portable pour lequel l'utilisateur a un contrat, ainsi que des informations relatives à la durée du contrat, et
ladite macro-commande est une macro-commande servant à fournir audit utilisateur des informations relatives à un téléphone portable, sur la base du numéro de téléphone dudit téléphone portable et sur la base de la durée du contrat.

7. Système de fourniture de services de réseau de communication de données selon la revendication 3, dans lequel lesdites informations relatives à l'utilisateur comprennent le nom d'utilisateur et une adresse de délivrance, et
ladite macro-commande est une macro-commande servant à recevoir une commande d'un produit en provenance de l'utilisateur, à transmettre ledit nom d'utilisateur et ladite adresse de délivrance à un serveur fournissant un service d'achat en ligne, et à placer ladite commande du produit.

8. Système de fourniture de services de réseau de communication de données selon la revendication 1, dans lequel
ladite unité de module de fonction (38) stocke un premier module de fonction accédant à un serveur de courrier électronique, un second module de fonction exécutant un processus prescrit sur un courrier électronique stocké dans ledit serveur de courrier électronique, et un troisième module de fonction établissant un procédé de notification d'un résultat de traitement effectué sur ledit courrier électronique, et
ladite macro-commande est une macro-commande préparée par au moins l'un desdits premier à troisième modules de fonction.

9. Système de fourniture de services de réseau de communication de données selon la revendication 1, dans lequel
ladite unité de module de fonction (38) stocke un premier module de fonction accédant à un serveur de base de données, un second module de fonction effectuant une recherche de données sur la base d'un mot clé de recherche, un troisième module de fonction établissant un format de sortie d'un résultat de recherche, et un quatrième module de fonction établissant un procédé de notification du résultat de la recherche, et
ladite macro-commande est une macro-commande préparée en combinant au moins l'un desdits premier à quatrième modules de fonction.

10. Système de fourniture de services de réseau de communication de données selon la revendication 1, dans lequel
ladite unité de module de fonction (38) comprend un premier module de fonction accédant à un premier serveur de recherche fournissant un service de recherche de page Web et obtenant un résultat de recherche, un second module de fonction accédant à un second serveur de recherche fournissant un service de recherche de page Web différent de celui du premier serveur de recherche et obtenant un résultat de recherche, un troisième module de fonction recevant une condition de recherche et transmettant respectivement auxdits premier et second modules de fonction une condition de recherche requise par lesdits premier et second serveurs de recherche, et un quatrième module de fonction recevant les résultats de recherche en provenance desdits premier et second modules de fonction et supprimant les résultats de recherche cumulatifs, et
ladite macro-commande est une macro-commande préparée en combinant lesdits premier à quatrième modules de fonction.

11. Système de fourniture de services de réseau de communication de données selon la revendication 1, dans lequel
ladite unité de module de fonction (38) comprend un premier module de fonction accédant à un ordinateur serveur délivrant en sortie une adresse sur la base d'une condition de recherche, un second module de fonction accédant à un ordinateur serveur délivrant en sortie une mappe sur la base d'une adresse et obtenant une mappe, et un troisième module de fonction recevant une condition de recherche et transmettant la condition audit premier module de fonction, et
ladite macro-commande est une macro-commande préparée en combinant lesdits premier à troisième modules de fonction.

12. Système de fourniture de services de réseau de communication de données selon la revendication 1, dans lequel
ladite unité de module de fonction (38) comprend un premier module de fonction accédant à un ordinateur serveur délivrant en sortie une adresse sur la base d'une condition de recherche et obtenant une adresse, un second module de fonction accédant à un ordinateur serveur délivrant en sortie une mappe sur la base d'une adresse et obtenant une mappe, un troisième module de fonction délivrant en sortie une position sur la base d'une adresse, un quatrième module de fonction indiquant une position désignée sur une mappe, et un cinquième module de fonction recevant une condition de recherche et transmettant la condition audit premier module de fonction, et
ladite macro-commande est une macro-commande préparée en combinant lesdits premier à cinquième modules de fonction.

13. Système de fourniture de services de réseau de communication de données selon la revendication 1, dans lequel ladite macro-commande est fournie par un fournisseur configurant une macro-commande.

14. Système de fourniture de services de réseau de communication de données selon la revendication 1, dans lequel ledit module de fonction est fourni par un fournisseur configurant une macro-commande.

15. Système de fourniture de services de réseau de communication de données selon la revendication 1, dans lequel ledit serveur de macro (30, 70, 90) comprend en outre une unité de contrôle d'état d'exécution (46) reliée à ladite unité d'exécution de macro (44) et contrôlant un état d'exécution de la macro-commande.

16. Serveur de macro utilisé dans un système de fourniture de services de réseau de communication de données comprenant un serveur de macro (30, 70, 90) relié à un terminal (52, 54) et à un serveur externe ou analogue adapté pour exécuter un processus prescrit conformément à une instruction en provenance dudit terminal (52, 54) et pour transmettre un résultat d'exécution audit terminal (52, 54),
ledit serveur de macro (30, 70, 90) comprenant :
une unité de communication (32, 34) adaptée pour commander les communications avec ledit terminal (52, 54),
une unité de base de données (48, 78, 98) adaptée pour stocker une macro-commande, et
une unité d'exécution de macro (44) reliée à ladite unité de base de données (48, 78, 98) et à ladite unité de communication (32, 34) et adaptée pour exécuter ladite macro-commande en réponse à une instruction en provenance dudit terminal (52, 54) et pour transmettre un résultat de l'exécution audit terminal (52, 54),
**caractérisé en ce que**
ledit terminal (52, 54) est relié audit serveur de macro (30, 70, 90) par l'intermédiaire d'un réseau de communication de données,
ladite unité de communication (32, 34) est adaptée pour commander les communications avec ledit terminal (52, 54) par l'intermédiaire dudit réseau de communication de données, et **en ce que**
ledit serveur de macro (30, 70, 90) comprend en outre :
une unité d'authentification d'utilisateur (34) reliée à ladite unité de communication (32, 34) et adaptée pour exécuter une authentification d'utilisateur sur la base d'un identifiant d'utilisateur transmis à partir dudit terminal (52, 54) par l'intermédiaire dudit réseau de communication de données,
une unité de module de fonction (38) adaptée pour stocker un module de fonction implémentant une fonction prédéterminée,
une unité de configuration de macro (36, 76) reliée à ladite unité de communication (32, 34) et à ladite unité de module de fonction (38) et adaptée pour configurer une macro-commande afin d'exécuter une série de processus préparés par la combinaison de modules de fonction, et
une unité d'enregistrement de macro (40) reliée à ladite unité de configuration de macro (36, 76) et à ladite unité de base de données (48, 78, 98) et adaptée pour enregistrer ladite macro-commande dans ladite unité de base de données (48, 78, 98).

17. Serveur de macro selon la revendication 16, comprenant en outre
une unité d'enregistrement d'utilisateur (72, 92) reliée à ladite unité de base de données (78, 98) et enregistrant un identifiant d'utilisateur d'un utilisateur autorisé à utiliser une macro-commande enregistrée dans ladite unité de base de données (78, 98) conformément à une instruction en provenance dudit terminal (52, 54).

18. Serveur de macro selon la revendication 17, dans lequel ladite unité d'enregistrement d'utilisateur (72, 92) enregistre des informations relatives à l'utilisateur conjointement avec l'enregistrement dudit identifiant d'utilisateur.

19. Serveur de macro selon la revendication 18, dans lequel ladite macro-commande est une macro-commande servant à effectuer la distribution, sur le réseau, de messages publicitaires associés auxdites informations relatives à l'utilisateur.

20. Serveur de macro selon la revendication 18, dans lequel lesdites informations relatives à l'utilisateur comprennent une adresse de courrier électronique d'un fournisseur de services de réseau de communication de données avec lequel l'utilisateur a un contrat ainsi que la durée du contrat, et
ladite macro-commande est une macro-commande servant à fournir audit utilisateur des informations relatives à un fournisseur de services de réseau de communication de données, sur la base de ladite adresse de courrier électronique et de ladite durée du contrat.

21. Serveur de macro selon la revendication 18, dans lequel
lesdites informations relatives à l'utilisateur comprennent des informations relatives à un numéro de téléphone d'un téléphone portable pour lequel l'utilisateur a un contrat, ainsi que des informations relatives à la durée du contrat, et
ladite macro-commande est une macro-commande servant à fournir audit utilisateur des informations relatives à un téléphone portable, sur la base du numéro de téléphone dudit téléphone portable et sur la base de la durée du contrat.

22. Serveur de macro selon la revendication 18, dans lequel
lesdites informations relatives à l'utilisateur comprennent le nom d'utilisateur et une adresse de délivrance, et
ladite macro-commande est une macro-commande servant à recevoir une commande d'un produit en provenance de l'utilisateur, à transmettre ledit nom d'utilisateur et ladite adresse de délivrance à un serveur fournissant un service d'achat en ligne, et à placer ladite commande du produit.

23. Serveur de macro selon la revendication 16, dans lequel
ladite unité de module de fonction (38) stocke un premier module de fonction accédant à un serveur de courrier électronique, un second module de fonction exécutant un processus prescrit sur un courrier électronique stocké dans ledit serveur de courrier électronique, et un troisième module de fonction établissant un procédé de notification d'un résultat de traitement effectué sur ledit courrier électronique, et
ladite macro-commande est une macro-commande préparée par au moins l'un desdits premier à-troisième modules de fonction.

24. Serveur de macro selon la revendication 16, dans lequel
ladite unité de module de fonction (38) stocke un premier module de fonction accédant à un serveur de base de données, un second module de fonction effectuant une recherche de données sur la base d'un mot clé de recherche, un troisième module de fonction établissant un format de sortie d'un résultat de recherche, et un quatrième module de fonction établissant un procédé de notification du résultat de la recherche, et
ladite macro-commande est une macro-commande préparée en combinant au moins l'un desdits premier à quatrième modules de fonction.

25. Serveur de macro selon la revendication 16, dans lequel
ladite unité de module de fonction (38) comprend un premier module de fonction accédant à un premier serveur de recherche fournissant un service de recherche de page Web et obtenant un résultat de recherche, un second module de fonction accédant à un second serveur de recherche fournissant un service de recherche de page Web différent de celui du premier serveur de recherche et obtenant un résultat de recherche, un troisième module de fonction recevant une condition de recherche et transmettant respectivement auxdits premier et second modules de fonction une condition de recherche requise par lesdits premier et second serveurs de recherche, et un quatrième module de fonction recevant les résultats de recherche en provenance desdits premier et second modules de fonction et supprimant les résultats de recherche cumulatifs, et
ladite macro-commande est une macro-commande préparée en combinant lesdits premier à quatrième modules de fonction.

26. Serveur de macro selon la revendication 16, dans lequel
ladite unité de module de fonction (38) comprend un premier module de fonction accédant à un ordinateur serveur délivrant en sortie une adresse sur la base d'une condition de recherche, un second module de fonction accédant à un ordinateur serveur délivrant en sortie une mappe sur la base d'une adresse et obtenant une mappe, et un troisième module de fonction recevant une condition de recherche et transmettant la condition audit premier module de fonction, et
ladite macro-commande est une macro-commande préparée en combinant lesdits premier à quatrième modules de fonction.

27. Serveur de macro selon la revendication 16, dans lequel
ladite unité de module de fonction (38) comprend un premier module de fonction accédant à un ordinateur serveur délivrant en sortie une adresse sur la base d'une condition de recherche et obtenant une adresse, un second module de fonction accédant à un ordinateur serveur délivrant en sortie une mappe sur la base d'une adresse et obtenant une mappe, un troisième module de fonction délivrant en sortie une position sur la base d'une adresse, un quatrième module de fonction indiquant une position désignée sur une mappe, et un cinquième module de fonction recevant une condition de recherche et transmettant la condition audit premier module de fonction, et
ladite macro-commande est une macro-commande préparée en combinant lesdits premier à cinquième modules de fonction.

28. Serveur de macro selon la revendication 16, dans lequel ladite macro-commande est fournie par un fournisseur configurant une macro-commande.

29. Serveur de macro selon la revendication 16, dans lequel ledit module de fonction est fourni par un fournisseur configurant une macro-commande.

30. Serveur de macro selon la revendication 16, dans lequel ledit serveur de macro comprend en outre une unité de contrôle d'état d'exécution (46) reliée à ladite unité d'exécution de macro (44) et contrôlant un état d'exécution de la macro-commande.

31. Procédé de fourniture de services de réseau de communication de données utilisé dans un système de fourniture de services de réseau de communication de données comprenant un serveur de macro (30, 70, 90) relié à un terminal (52, 54) et à un serveur externe ou analogue pour exécuter un processus prescrit conformément à une instruction en provenance dudit terminal (52, 54) et transmettre un résultat de l'exécution audit terminal (52, 54), dans lequel ledit serveur de macro (30, 70, 90) comprend :
une unité de communication (32, 34) servant à commander les communications avec ledit terminal (52, 54),
une unité de base de données (48, 78, 98) stockant une macro-commande, et
une unité d'exécution de macro (44) reliée à ladite unité de base de données (48, 78, 98) et à ladite unité de communication (32, 34) pour exécuter ledit processus,
**caractérisé par** les étapes consistant à :
relier ledit terminal (52, 54) audit serveur de macro (30, 70, 90) par l'intermédiaire d'un réseau de communication de données,
commander, à l'aide de ladite unité de communication (32, 34), lesdites communications avec ledit terminal (52, 54) par l'intermédiaire dudit réseau de communication de données,
effectuer une authentification d'utilisateur sur la base d'un identifiant d'utilisateur transmis à partir dudit terminal (52, 54),
stocker dans une unité de module de fonction (38) un module de fonction implémentant une fonction prédéterminée,
configurer une macro-commande pour exécuter une série de processus préparée en combinant des modules de fonction à l'aide d'une unité de configuration de macro (36, 76) reliée à ladite unité de communication (32, 34) et à ladite unité de module de fonction (38), et
enregistrer ladite macro-commande dans ladite unité de base de données (48, 78, 98) à l'aide d'une unité d'enregistrement de macro (40) reliée à ladite unité de configuration de macro (36, 76) et à ladite unité de base de données (48, 78,98).

32. Procédé de fourniture de services de réseau de communication de données selon la revendication 31, comprenant en outre l'étape consistant à enregistrer un identifiant d'utilisateur d'un utilisateur autorisé à utiliser ladite macro-commande

33. Procédé de fourniture de services de réseau de communication de données selon la revendication 32, dans lequel ladite étape consistant à enregistrer un identifiant d'utilisateur comprend l'étape consistant à enregistrer ledit identifiant d'utilisateur et des informations relatives à l'utilisateur.

34. Procédé de fourniture de services de réseau de communication de données selon la revendication 33, dans lequel ladite étape consistant à exécuter ladite macro-commande comprend l'étape consistant à distribuer par l'intermédiaire du réseau un message publicitaire associé auxdites informations relatives à l'utilisateur.

35. Procédé de fourniture de services de réseau de communication de données selon la revendication 33, dans lequel lesdites informations relatives à l'utilisateur comprennent une adresse de courrier électronique d'un fournisseur de services de réseau de communication de données avec lequel l'utilisateur a un contrat ainsi que la durée du contrat, et
ladite étape consistant à exécuter ladite macro-commande comprend l'étape consistant à fournir audit utilisateur des informations relatives à un fournisseur de services de réseau de communication de données fournissant un service à un prix avantageux, sur la base de ladite adresse de courrier électronique et de ladite durée du contrat.

36. Procédé de fourniture de services de réseau de communication de données selon la revendication 33, dans lequel lesdites informations relatives à l'utilisateur comprennent un numéro de téléphone d'un téléphone portable pour lequel l'utilisateur a un contrat, ainsi que la durée du contrat, et
ladite étape consistant à exécuter ladite macro-commande comprend l'étape consistant à fournir audit utilisateur des informations relatives à un téléphone portable fournissant un service à prix avantageux, sur la base du numéro de téléphone dudit téléphone portable et sur la base de la durée du contrat.

37. Procédé de fourniture de services de réseau de communication de données selon la revendication 33, dans lequel
lesdites informations relatives à l'utilisateur comprennent un nom d'utilisateur et une adresse de délivrance, et
ladite étape consistant à exécuter ladite macro-commande comprend l'étape consistant à recevoir une commande d'un produit en provenance d'un utilisateur, à transmettre ledit nom d'utilisateur et ladite adresse de délivrance à un serveur fournissant un service d'achat en ligne, et à placer une commande dudit produit.

38. Procédé de fourniture de services de réseau de communication de données selon la revendication 31, dans lequel ledit module de fonction comprend un premier module de fonction accédant à un serveur de courrier électronique, un second modulé de -fonction exécutant un processus prescrit sur un courrier électronique stocké dans ledit serveur de courrier électronique, et un troisième module de fonction établissant un procédé de notification d'un résultat du processus effectué sur ledit courrier électronique, et
ladite étape consistant à exécuter ladite macro-commande comprend l'étape consistant à exécuter une macro-commande préparée en combinant au moins l'un desdits premier à troisième modules de fonction.

39. Procédé de fourniture de services de réseau de communication de données selon la revendication 31, dans lequel
ledit module de fonction comprend un premier module de fonction accédant à un serveur de base de données, un second module de fonction effectuant une recherche de données sur la base d'un mot clé de recherche, un troisième module de fonction établissant un format de sortie d'un résultat de recherche, et un quatrième module de fonction établissant un procédé de notification du résultat de la recherche, et
ladite étape consistant à exécuter ladite macro-commande comprend l'étape consistant à exécuter une macro-commande préparée en combinant au moins l'un desdits premier à quatrième modules de fonction.

40. Procédé de fourniture de services de réseau de communication de données selon la revendication 31, dans lequel ledit module de fonction comprend un premier module de fonction accédant à un premier serveur de recherche fournissant un service de recherche de page Web et obtenant un résultat de recherche, un second module de fonction accédant à un second serveur de recherche fournissant un service de recherche de page Web différent de celui du premier serveur de recherche et obtenant un résultat de recherche, un troisième module de fonction recevant une condition de recherche et transmettant respectivement auxdits premier et second modules de fonction une condition de recherche requise par lesdits premier et second serveurs de recherche, et un quatrième module de fonction recevant des résultats de recherche en provenance desdits premier et second modules de fonction et supprimant les résultats de recherche cumulatifs, et
ladite étape consistant à exécuter ladite macro-commande comprend l'étape consistant à exécuter une macro-commande préparée en combinant lesdits premier à quatrième modules de fonction.

41. Procédé de fourniture de services de réseau de communication de données selon la revendication 31, dans lequel
ledit module de fonction comprend un premier module de fonction accédant à un ordinateur serveur délivrant en sortie une adresse sur la base d'une condition de recherche et obtenant une adresse, un second module de fonction accédant à un ordinateur serveur délivrant en sortie une mappe sur la base d'une adresse et obtenant une mappe, et un troisième module de fonction recevant une condition de recherche et transmettant la condition audit premier module de fonction, et
ladite étape consistant à exécuter ladite macro-commande comprend l'étape consistant à exécuter une macro-commande préparée en combinant lesdits premier à troisième modules de fonction.

42. Procédé de fourniture de services de réseau de communication de données selon la revendication 31, dans lequel ledit module de fonction comprend un premier module de fonction accédant à un ordinateur serveur délivrant en sortie une adresse sur la base d'une condition de recherche et obtenant une adresse, un second module de fonction accédant à un ordinateur serveur délivrant en sortie une mappe sur la base d'une adresse et obtenant une mappe, un troisième module de fonction délivrant en sortie une position sur la base d'une adresse, un quatrième module de fonction indiquant une position désignée sur une mappe, et un cinquième module de fonction recevant une condition de recherche et transmettant la condition audit premier module de fonction; et
ladite étape consistant à exécuter ladite macro-commande comprend l'étape consistant à exécuter une macro-commande préparée en combinant lesdits premier à cinquième modules de fonction.

43. Procédé de fourniture de services de réseau de communication de données selon la revendication 31, dans lequel ladite macro-commande est fournie par un fournisseur configurant une macro-commande.

44. Procédé de fourniture de services de réseau de communication de données selon la revendication 31, dans lequel ledit module de fonction est fourni par un fournisseur configurant une macro-commande.

45. Procédé de fourniture de services de réseau de communication de données selon la revendication 31, comprenant en outre l'étape consistant à contrôler un état d'exécution de ladite macro-commande.
